# EUROPEAN PATENT SPECIFICATION

(11) **EP 0 809 765 B1**
(45) Date of publication and mention of the grant of the patent: **10.05.2000**
(21) Application number: 96904399.1
(22) Date of filing: 16.02.1996
(51) Int. Cl.: F16H 61/12, B60K 23/02, F16D 48/02

(54) **A SAFETY SYSTEM IN A CLUTCH MANAGEMENT SYSTEM, AN ELECTRONIC BACKUP CONTROL UNIT AND A METHOD FOR CONTROL**
KUPPLUNGSSTEUERUNG MIT INTEGRIERTEM SICHERHEITSSYSTEM, ELEKTISCHER NOTSTEUEREINRICHTUNG UND VERFAHREN ZUR STEUERUNG
SYSTEME DE SECURITE INTEGRE A UN SYSTEME DE GESTION D'EMBRAYAGE, MODULE DE COMMANDE ELECTRONIQUE DE SECOURS ET PROCEDE DE COMMANDE

(30) Priority: 17.02.1995 NO 950617
(43) Date of publication of application: 03.12.1997
(73) Proprietor: LUK LEAMINGTON LIMITED, Leamington Spa, Warwickshire CV31 3ER (GB)
(72) Inventor: NORDGARD, Knut, (NO)
(74) Representative: Watts, Peter Graham
(86) International application number: NO9600036
(87) International publication number: WO9625612

(56) References cited:
- GB-A- 2 228 107
- US-A- 4 628 772
- US-A- 4 910 494

## Description

The invention concerns a safety system in a clutch management system CMS for an automatically activated clutch, wherein the clutch is located between the engine and the gearbox in a car and is operated by a hydraulic actuator, the clutch being connected to the gearbox via an input shaft, wherein the clutch management system CMS comprises a hydraulic power unit HPU, a proportional flow valve or main valve which controls the flow in the actuator which regulates the position of the clutch's thrust bearing and thereby the torque transferred through the clutch, and an electronic main control unit ECU which controls the position of the actuator via the main valve according to algorithms stored in the ECU on the basis of input values from sensors which continuously detect the gearbox input shaft speed, actuator position, engine speed and throttle activation, and whether or not the brakes are activated, together with gear position. The invention further concerns an electronic backup control unit for the safety system. The invention also concerns methods for control in a safety system in a clutch management system CMS for an automatically activated clutch, wherein the clutch is located between an engine and a gearbox in a car and is operated by a hydraulic actuator, the clutch being connected to the gearbox via an input shaft, wherein the clutch management system CMS comprises a hydraulic power unit HPU, a proportional flow valve or main valve which controls the flow in the actuator, which regulates the position of the clutch's thrust bearing and thereby the torque transferred through the clutch, and an electronic main control unit ECU which controls the position of the actuator via the main valve according to algorithms stored in the ECU on the basis of input values from sensors which continuously detect gearbox input shaft speed, actuator position, engine speed and throttle activation, whether or not the brakes are activated, together with gear position.

US-A-4910494 discloses the features of the preamble of claim 1 or 14.

In the known clutch management system error conditions can occur which make driving dangerous. In such error conditions there will normally be no fail safe state to which the clutch can return when an error occurs. For example there is a risk to safety when the clutch erroneously disengages in a situation where the driver expects the car to react with a high engine rating, e.g. when overtaking. It is also considered to be a safety risk if the clutch erroneously engages in a situation where the driver does not expect the car to start moving, for example in front of a pedestrian crossing. The safety system according to the present invention is consequently based on the fact that no fail safe state exists to which the clutch can return when errors of this kind occur.

Thus an object of the safety system according to the invention is that it should prevent any situation representing a safety risk which may arise, provided that only one error occurs at a time in the system. However, this does not imply that the system will be unable to cope with more than one error at a time, but this cannot be guaranteed in every case, even though modifications of the safety system within the scope of the invention can make it possible to deal with more than one error at a time.

It is a further object of the safety system according to the invention that if an error should occur in the clutch management system CMS, after it has been diagnosed, the fault should result in the activation by the safety system of alternative operating modes which do not involve the error function, the driver of the car should be informed of which measures he must take, and information concerning the error should be stored for subsequent use in connection with service or repair. Basically this means that if the diagnosed error does not affect the ability of the main control unit to correctly operate the control software, the microcontroller therein will fulfil these additional objects. On the other hand, if the error is so serious that the main control unit is totally incapable of controlling the clutch, the control of the clutch should immediately be transferred from the main control unit to the safety system.

Thus it is yet a further object of the safety system according to the invention that if an error affects the ability of the main control unit to correctly operate the control software, the control is transferred by means of a watchdog system to the safety system and systems outside the clutch management system CMS must register the situation and inform the driver on which measures he should take, as well as storing the information concerning the error for subsequent use.

The above-mentioned and other objects are achieved according to the invention with a safety system which is characterized in providing an electronic backup control unit ECU which automatically takes over control of the clutch management system CMS when an error state is detected therein, the control method comprising the following steps: continuously detecting gearbox input shaft speed, engine speed and throttle activation, detecting whether or not the brakes are activated, detecting gear position, supplying a digital output signal in order to control the operation of the hydraulic power unit HPU, supplying a digital output signal in order to permit engine start, receiving a digital input signal which indicates whether or not a starter motor is active, thus ensuring that the hydraulic power unit and the starter motor are not simultaneously activated, and receiving data from an operator terminal via a serial input line.

The elecronic backup control unit according to the invention is characterized in comprising a continously running state machine SM.

A first method for control in the safety system according to the invention is characterized in providing an electronic backup control unit ECU (13) which automatically takes over control of the clutch management system CMS when an error state is detected therein, the control method comprising the following steps: continuously detecting gearbox input shaft speed, engine speed and throttle activation, detecting whether or not the brakes are activated, detecting gear position, supplying a digital output signal in order to control the operation of the hydraulic power unit HPU, supplying a digital output signal in order to permit engine start, and receiving a digital input signal which indicates whether or not a starter motor is active, thus ensuring that the hydraulic power unit and the starter motor are not simultaneously activated, while a second method for control in the safety system according to the invention is characterized in providing an electronic backup control unit ECU which automatically takes over control of the clutch management system CMS when an error state is detected therein, and implementing a continuously running state machine SM in the backup control unit ECU, the control method comprising the following steps: continuously detecting gearbox input shaft speed, engine speed and throttle activation, detecting whether or not the brakes are activated, detecting gear position, supplying a digital output signal in order to control the operation of the hydraulic power unit HPU, supplying a digital output signal in order to permit engine start, and receiving a digital input signal which indicates whether or not a starter motor is active, thus ensuring that the hydraulic power unit and the starter motor are not simultaneously activated.

The invention will now be described in more detail by way of non-limiting examples of preferred embodiments with reference to the accompanying drawing.

Figure 1 is a schematic illustration of the clutch management system CMS with the safety system according to the invention.

Figure 2 shows the same as figure 1 in the form of a block diagram.

Figure 3 is a schematic illustration of the fundamental hydraulic and electrical design of the clutch management system and the safety system according to the invention.

Fig. 4-18 show schematic illustrations of various preferred embodiments of the electronic layout of the clutch management system CMS and the safety system.

Figures 18-25 show flow charts for operations and decisions which are included in the method according to the invention.

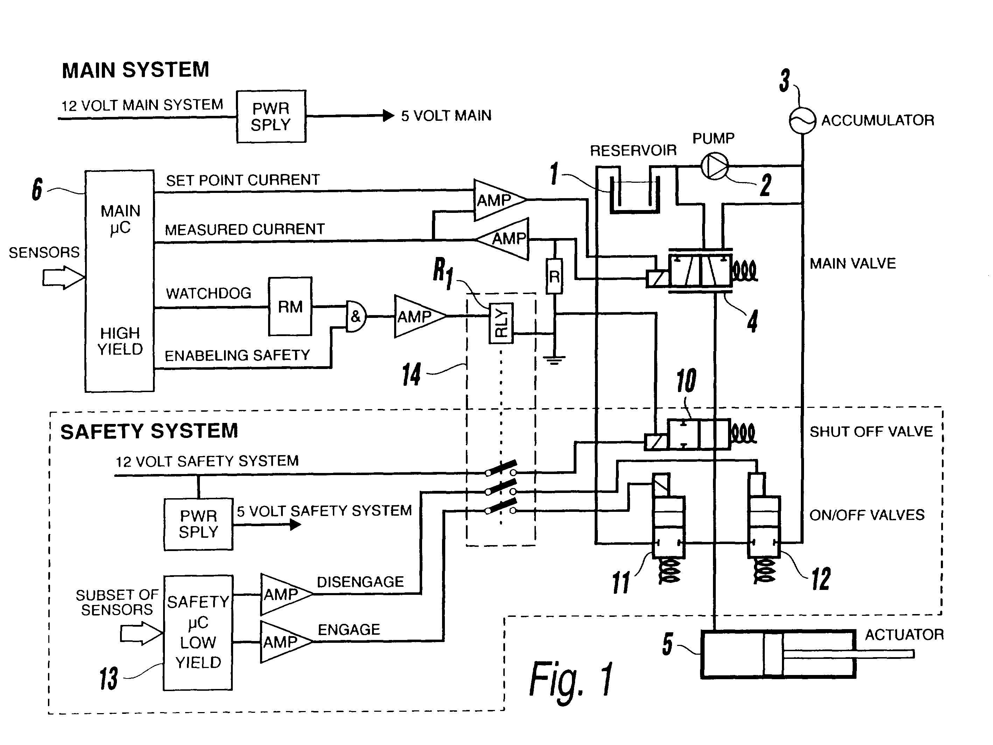

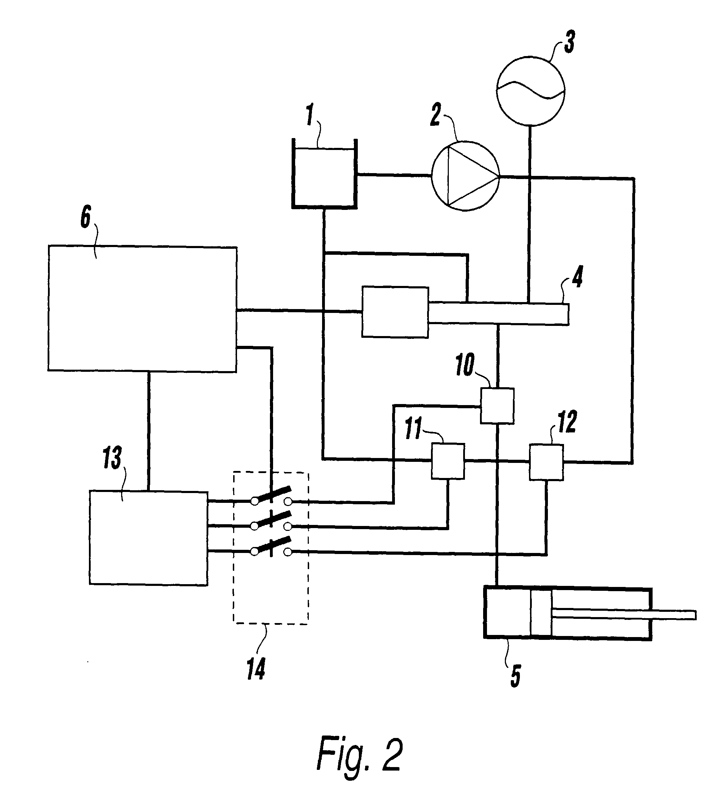

As illustrated in figures 1 and 2, the main part of the clutch management system CMS comprises a main control unit ECU 6 which essentially constitutes a microcomputer with memory and control processor. The main control unit is connected to a solenoid-controlled proportional oil-flow valve or main valve 4 which is connected on one side with a hydraulic power unit HPU consisting of an oil reservoir 1, an oil pump 2, and a hydraulic accumulator 3 together with a solenoid-controlled shut-off valve 10 which is also connected to the main control unit ECU 6. The main valve 4 controls the amount of oil in the actuator 5 which regulates the position of the thrust bearing of the not shown clutch and thereby the torque which is transferred from a not shown car engine and through the clutch to a not shown gearbox in the car. The hydraulic actuator 5 regulates the position of the thrust bearing of the clutch and thereby the torque which is transferred through the clutch. The main control unit ECU 6 controls the position of the actuator 5 by manoeuvring the valve 4 according to stored algorithms which are based on various sensor inputs which are only schematically indicated in figure 1.

The actual safety system comprises the shut-off valve 10 which is provided in the oil pipe between the main valve 4 and the actuators 5. Should an error occur in the clutch management system's main system, with the result that the main control unit ECU 6 is no longer capable of controlling the position of the actuator 5, the shut-off valve 10 shuts off the oil in the actuator, thereby preventing erroneous movement of the clutch. An on/off valve 11 is connected to a backup control unit ECU 13 in the safety system and receives therefrom a pulse width modulated signal which, during an error condition which is handled by the safety system, causes oil to be released from the actuator 5 at a controlled rate. Correspondingly, an on/off valve 12 is also connected to the backup control unit ECU 13 and during an error condition which is dealt with by the safety system will receive from the backup control unit ECU 13 a pulse width modulated signal which admits oil into the actuator 5 at a controlled rate.

The backup control unit ECU 13 comprises a microcomputer with a lower capacity than the microcomputer in the main control unit ECU 6, the microcomputer in the backup control unit ECU 13 also comprising a control processor and memories. The main control unit ECU 6 in the safety system controls the position of the actuator 5 by manoeuvring the on/off valves 11, 12 according to algorithms based on various sensor inputs which are only schematically indicated in figure 1. Due to economic considerations ECU 13 has significantly lower capacity and performance compared to ECU 6. In general this should represent less comfortable driving. However, the level of driving comfort will never be so low that an ordinary driver will be unable to drive the car. The ECU 13 can be advantageously integrated into the same housing as the ECU 6. As already mentioned the solenoid-controlled valves 10, 11, 12 are also connected to ECU 13, a switch device 14, eg. in the form of a relay circuit being provided in this connection which makes it impossible for the safety system to manoeuvre the on/off valves 11, 12 unless the shut-off valve 10 is really closed. - It should be understood that continuous valves, e.g. slide valves, could be substituted for valves 10, 11, 12, as they need not be implemented as on/off valves only.

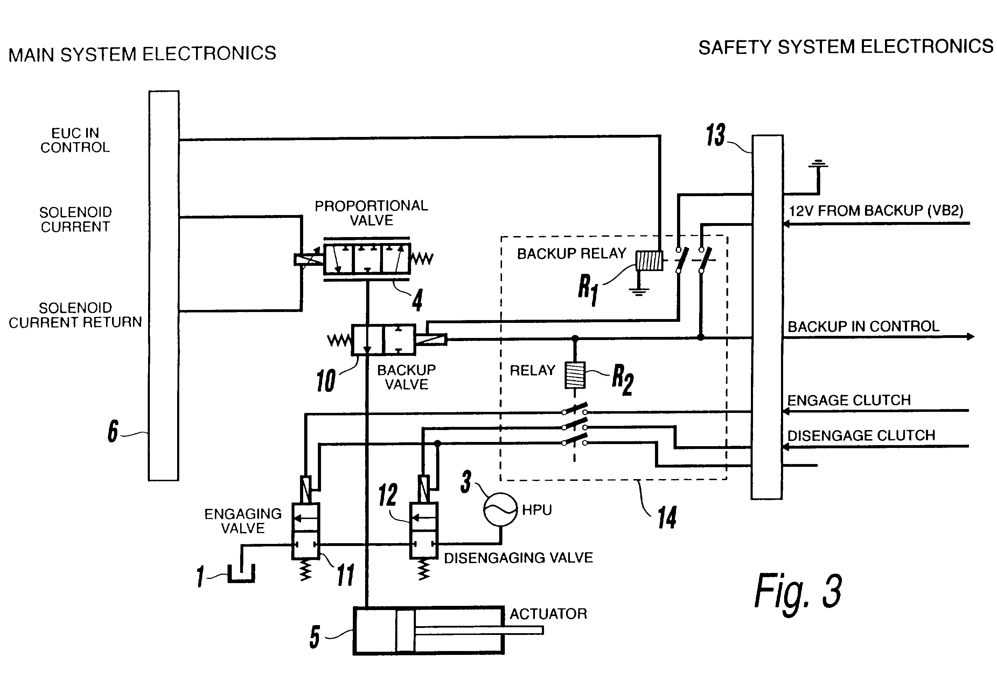

The fundamental hydraulic and electrical design of the clutch management system with the safety system according to the invention are illustrated schematically in figure 3. The electronic control units ECU 6 and ECU 13 can both be integrated on the same circuit board. In one version ECU 6 is based on the microcontroller Siemens 167, while ECU 13 is based on Motorola 68 HC705B16. Each of the control units ECU 6, 13 is operated by separate 5 volt regulators which in turn are fed with 12 volts through separate lines from the car battery. The 5 volt regulators are designed in such a manner that they supply the respective control unit including the necessary sensors and interface circuits within a spacious margin. Apart from this these regulators do not feed any external devices. The regulator for the safety system will always be on, thus ensuring that the backup control unit ECU 13 is continuously supplied with voltage, unless the battery is disconnected.

The main system with the main control unit ECU 6 is activated by three different sources, viz. a door switch, the ignition or the backup control unit ECU 13. When the door on the driver's side is opened, the main system will immediately be put into operation, which means that the pump 2 or the motor in the hydraulic power unit HPU can be started, thus enabling the system's pressure to be promptly built up. If the ignition is not switched on after a specific period of time, the system disconnects the power. Power is always supplied to the main system when the ignition is switched on, which means that the system can be started after a time-determined disconnection of the door switch. The main system knows that the ignition signal indicated that it was supplied with power or was reset. The safety system switches the main system on periodically after the system is switched off according to the calculation of a temperature algorithm (see below). The main system must be able to distinguish between the power being switched on and a reset triggered by the door switch or the main control unit ECU 6 in order to make a decision on further action. The communication lines can be used in order to solve this problem. The safety system, which is always supplied with power, will receive an external reset when the ignition is switched on (and when the battery is reconnected). No other sources can activate the safety system.

A power-hold function makes it possible for the main control unit ECU 6 to take control of the power-on sequence for certain in/out functions and the power cut sequence on both inputs and outputs and the actual control unit. This is in order to avoid questionable and undefinable situations during power on/off and to give the control unit time to be shut off correctly when the ignition is switched off. During the power-hold sequence the main control unit ECU 6 will also store long-term data and initiate system variables for the next initiation of the system. Since the backup control unit ECU 13 is always supplied with power, there is no need for a power hold function for the safety system. Instead the backup control unit ECU 13 will end in the stop mode when it is time to shut off completely, the control unit ECU 6 and all its functions thus stopping until an external reset is carried out from the ignition. In the stop mode the backup control unit ECU 13 uses very little power. The safety system has to delay the 12 volt voltage to the shut-off valve in the safety system until the main system has had time to initiate the control via the safety circuit device 14 (fig. 3).

After the power hold sequence has been completed, the main control unit ECU 6 will switch off the power to the main system. For several hours (1-3) after the ignition has been switched off and after the power is switched off, however, the main control unit must perform a short calculation at 15-30 second intervals. This entails taking readings from two temperature sensors and updating an algorithm, these operations being performed in order to keep a check on the temperature on the clutch's pressure plate. This is necessary in order to avoid erroneous start values if the car is restarted before the clutch temperature has dropped to the temperature measured in the environment. A rest mode for the main control unit is not used during the temperature algorithm in order to reduce the power consumption when the ignition is switched off. Instead the backup control unit ECU 13 will activate the main control unit ECU 6 by switching on the main system's power again every 30 seconds or thereabouts. If no ignition signal is registered and a message is received from the backup control unit ECU 13, the main control unit ECU 6 will then calculate a sample of the temperature algorithm before again switching off its supplied power. In the meantime the backup control unit will enter a waiting mode in order to reduce the power consumption. The above-mentioned sequence continues until the temperature algorithm is completed. At this point the backup control unit knows via a message from the main control unit that it is time to enter the stop mode. The backup control unit ECU 13 must not be capable of "warming up" and resetting the main control unit for temperature calculation when power has just been supplied to the main control unit due to the door switch. If the main system is put into operation due to an ignition signal during the temperature algorithm calculation, the backup control unit will be reset and thus will not generate a reset of the power for the main control unit. Since the temperature algorithm procedure can be interrupted by the door switch, the main system should inform the backup control unit about an interrupted algorithm and a time out shutdown, thus allowing the backup control unit to continue to generate power resets with correct connecting time.

The main system in the clutch management system CMS employs a high-speed serial interface to transmit data to a real time logging system. Other serial interfaces on the main control unit ECU 6 are used to communicate with an operator terminal, for downloading of software and for diagnostics. The safety system must also be capable of transmitting data to a real time logging system and communicating with an operator terminal. Since there is only one serial interface in the safety system, the two functions must be separated with a switch. The serial line is either used to transmit data to the real time log or it is used to communicate with the operator terminal.

The main system should continuously confirm its error status to an external system, e.g. an instrument panel computer or hard-wired logic. This can be performed via a CAN (Controller Area Network) interface. If this communication fails, the driver will be warned via the external system. The safety system according to the invention should continuously confirm its error status to the main system. This can be performed via a digital output. If this communication fails, the main system should send a message to the external system. Finally mechanisms are provided which enable the safety system to take over control as quickly as possible after a breakdown in the main system.

The control logic in the safety system according to the invention will never "know" whether it has taken over the control functions, i.e. from the safety system's point of view the backup control unit ECU 13 will always attempt to control the on/off valves 11, 12. This means that there will be no loss of time due to the necessity of initializing the safety system when it has to take over the functions of the main system. This also means that the safety system must be able to read the attached sensors regardless of whether the main system is in control or not. This will be discussed in more detail below in connection with the in/out functions of the safety system.

The backup control unit ECU 13 receives input values from sensors which continuously detect the gearbox input shaft speed, engine speed and throttle activation, together with whether or not the foot brake is activated. The backup control unit also comprises a digital output in order to control the operation of the hydraulic power unit HPU and optionally a digital output in order to enable engine start, a digital input which indicates whether the starter motor is active, thus ensuring that the hydraulic power unit and the start module are not activated simultaneously, a serial line to the real time logging system and the operator terminal, a digital output in order to transfer the backup control unit's error status to the main control unit ECU 6 together with two pulse width modulated (PWM) outputs in order to control the on/off valves 11, 12 and finally a sensor input for detection of gear position.

The safety system according to the invention is dependent on the ability to find errors in the clutch management system CMS at an early point in time, thus enabling effective countermeasures to be implemented before dangerous situations arise. Thus for every single sensor there has been developed a "limp home algorithm" which excludes the sensor if it fails. In general this means that the car can still be driven, but with a reduced degree of comfort. The sensors, however, cannot detect errors which will finally result in the main control unit ECU 6 not executing the control logic correctly. Nor will the sensors be able to detect errors which cause the microcontroller in the main control unit to no longer be capable of controlling the actuator. In order to achieve this the safety system according to the present invention is designed in such a manner that it can take over the control of the clutch instantaneously or at least in the course of approximately 10 ms after finding a significant failure in the microcontroller in the main system or in the activation of the clutch itself. In other words the safety system according to the invention takes over control of the clutch management system when the main control unit ECU 6 no longer executes the control logic, which is detected by the watchdog function, when the main control unit ECU 6 loses voltage, and when the main control unit ECU 6 itself detects that it no longer has control of the power in the solenoid of the main valve 4.

The normal operating mode for the safety system according to the invention will now be described with reference to figure 3. When no error is detected in the main system, the safety system is in a state which causes the main system to control the actuator via the proportional valve or the main valve 4 in the manner already described. The line "ECU in control" feeds current through the safety switch device 14, which means that no current reaches the shut-off valve 10 and the on/off valves 11 and 12, which in turn means that the shut-off valve 10 is and remains open and the on/off valves are and remain closed.

When an error which is critical for safety occurs in the main system, the current which travels in the line "ECU in control" will be shut off and cause current to be fed through the shut-off valve 10 from the safety system as the safety switch device 14 is now deactivated. The shut-off valve 10 will shut off the oil supply to the actuator 5 from the proportional valve or the main valve 4 which is no longer under control. At the same time the switch device will be activated with the result that the safety system can control the on/off valves 11 and 12. This relay also ensures that current is supplied to the sensors which must be active when the safety system takes over control. As mentioned previously the backup control unit ECU 13 must have a separate power supply direct from the battery. As mentioned above, the safety switch device 14 may in reality be a relay circuit, and may comprise more than one relay, for instance two relays R₁, R₂ as shown in figure 3, and possibly additional relays, as will be discussed further below.

In connection with the safety system's control logic which is implemented in the backup control unit ECU 13, the following situations amongst others must be taken into consideration. The simplest case is when the gearshift takes place at normal speeds for the gears involved. However, a situation which is critical for safety will occur when overtaking another car. The clutch then has to be able to function so as to enable a gearshift to take place. A particularly difficult situation is driving off from zero speed and manoeuvring at low speed, e.g. during parking etc. This involves the implementation of the following control logic in the backup control unit ECU 13. The clutch speed should in this context be regarded as equivalent to the gearbox input shaft speed.
1) Overtaking: Clutch speed above a certain value and the engine running,
   a) positive gas - fast clutch engagement
   b) zero gas - fast clutch disengagement
2) Driving close to zero speed: Clutch speed below a certain value and the engine running,
   a) positive gas - slow clutch engagement
   b) zero gas - slow clutch disengagement
   c) brake on - fast clutch disengagement
3) The engine not running: involves fast clutch engagement.

Basically this control logic could mean that the sensors only required to detect speeds and throttle activation above and below a specific level, but a continuous detection means that continuous control algorithms can be used in most situations. The risk of the engine failing to brake sufficiently during long descents is dealt with by the backup control unit ECU 13 also receiving sensor information concerning gear position, thus enabling the clutch to be controlled by the gear lever instead of by the throttle. The unit system must also take over control of the operation of the hydraulic power unit HPU. This involves a digital output for this purpose. Finally the safety system enables the driver to start the engine, which also requires a digital input which indicates whether the starter motor is running or not. This information can be used to prevent the hydraulic power module from working at the same time as the starter motor.

The input and output signals of the safety system will now be discussed in more detail. Once again reference can be made to figure 3. The backup control unit ECU 13 requires a few input and output signals in order to be able to control the actuator 5 satisfactorily. The input and output signals are fed to and from ECU 13 by electronic interfaces. The already existing sensors in the main system can advantageously be used to deal with input signals, such as throttle activation, input shaft and motor speed, etc. Since the safety system must not come into conflict with the operation of the main system, consideration must be given to this in the design of the electrical interfaces for the said signals.

In general the sensor signals to the safety system are retrieved from the electronics in the main system, thus reducing the components in the safety system to a minimum and the most that will be necessary will be minor changes in the interfaces. In this context account should be taken of the fact that the backup control unit ECU 13 has to receive real time sensor values even when the main control unit ECU 6 is in control.

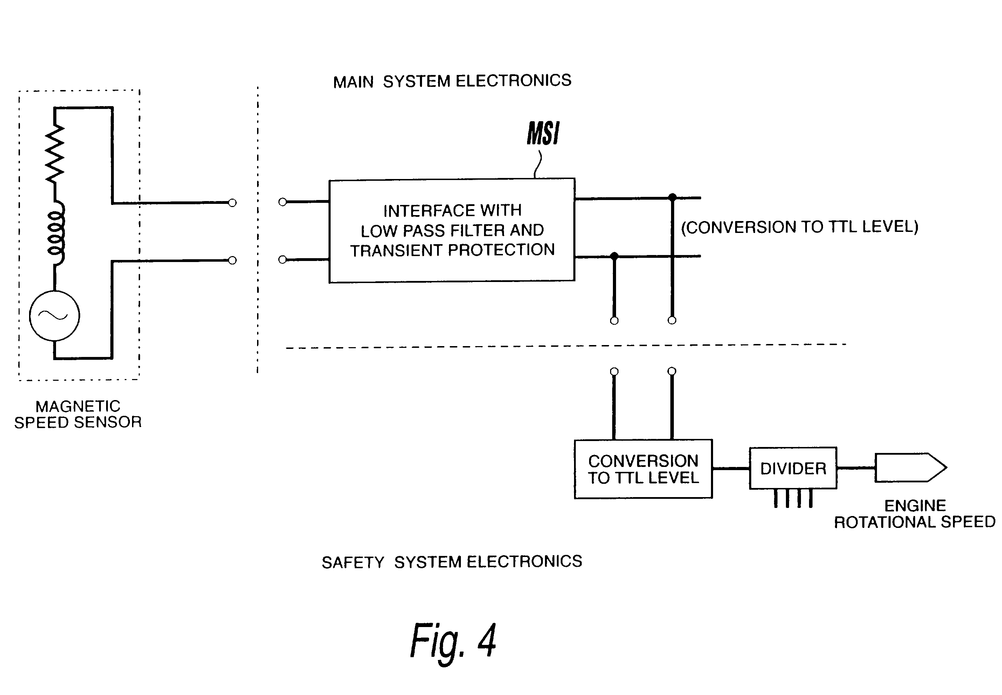

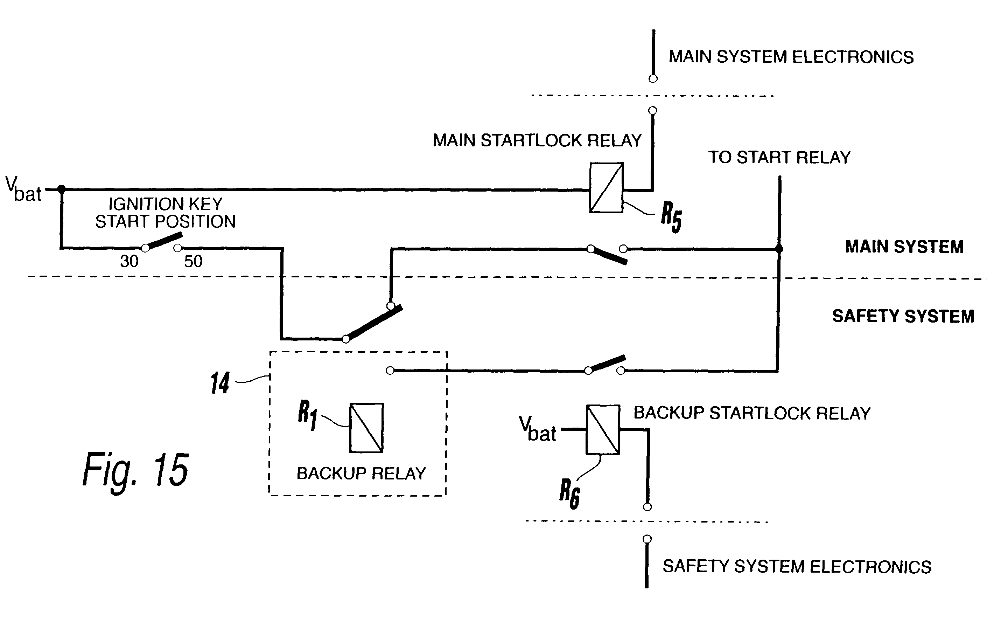

A more detailed discussion related to peferred embodiments of the detection and sensing circuits of the safety system, as well as the switch device 14, will now be given with particular reference to figures 4-18, which for the sake of clarity are restricted to the parts necessary of providing an understanding of the discussion.

With reference to fig. 4 the engine rotation speed is detected by a speed sensor based on variable reluctance which feeds the electronics in the main system with pulses which are generated when the teeth on the flywheel pass the sensor. The safety system utilizes the same pulse train. By retrieving the pulse train from the main system's electronics, a duplication of the electrical interface is avoided, and the same main system interface MSI is employed. For this purpose only one separate conversion to TTL level is necessary, and this can be carried out by a comparator both in the main system and in the safety system. A frequency divider may be used in order to reduce the pulse train frequency before it is supplied to the backup control unit ECU 13, which is slower than the main control unit ECU 6.

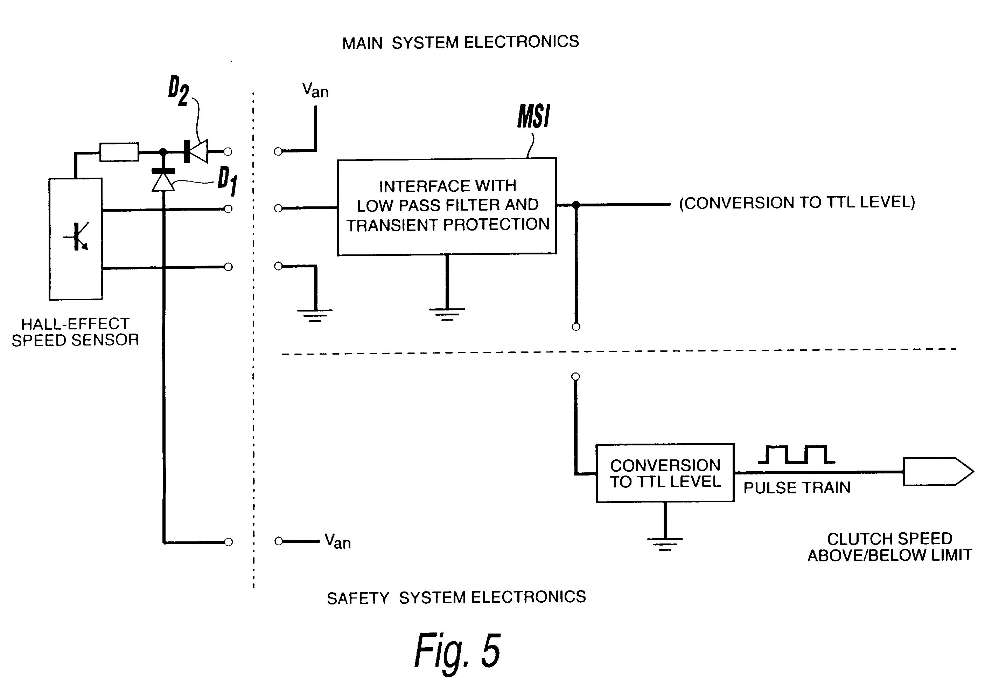

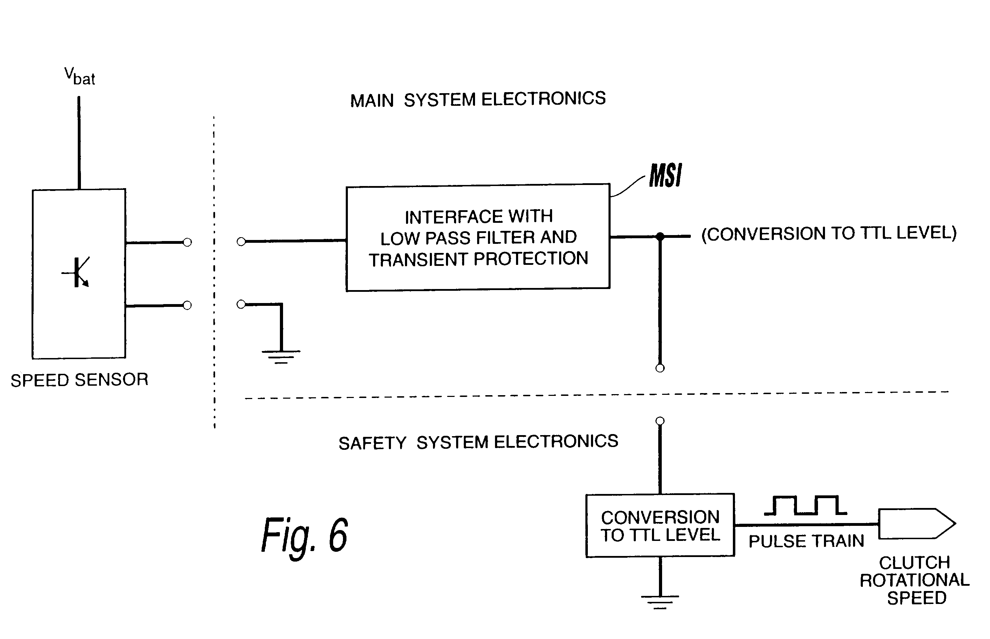

The sensor for the gearbox input shaft rotation speed in the main system can also be used by the safety system. The shaft speed sensor, e.g. a Hall effect sensor, as shown in fig. 5, requires a supply voltage which is provided by the main control unit ECU 6. Consequently the safety system has to supply this voltage in case the main system fails, which can be implemented by the use of diodes D₁, D₂. Since the pulse train from the shaft speed sensor has a much lower frequency than the pulse train from the engine speed sensor, it is not necessary to use a frequency divider before the pulse train is transferred to the backup control unit ECU 6. Two transient protective diodes (not shown) in the main system's interface MSI can, e.g., be replaced by a diode of the zener type. Thus the sensor signal is not lost if the power supply to the main unit is short-circuited to earth. The above-described solution can be simplified if the Hall effect sensor in fig. 5 is replaced as shown in fig. 6 by a sensor with a separate voltage supply line from the car battery, thereby avoiding extra relay contacts or diodes. However, this solution entails problems for the main system's power-hold function since the clutch speed sensor signal is lost when the ignition is switched off.

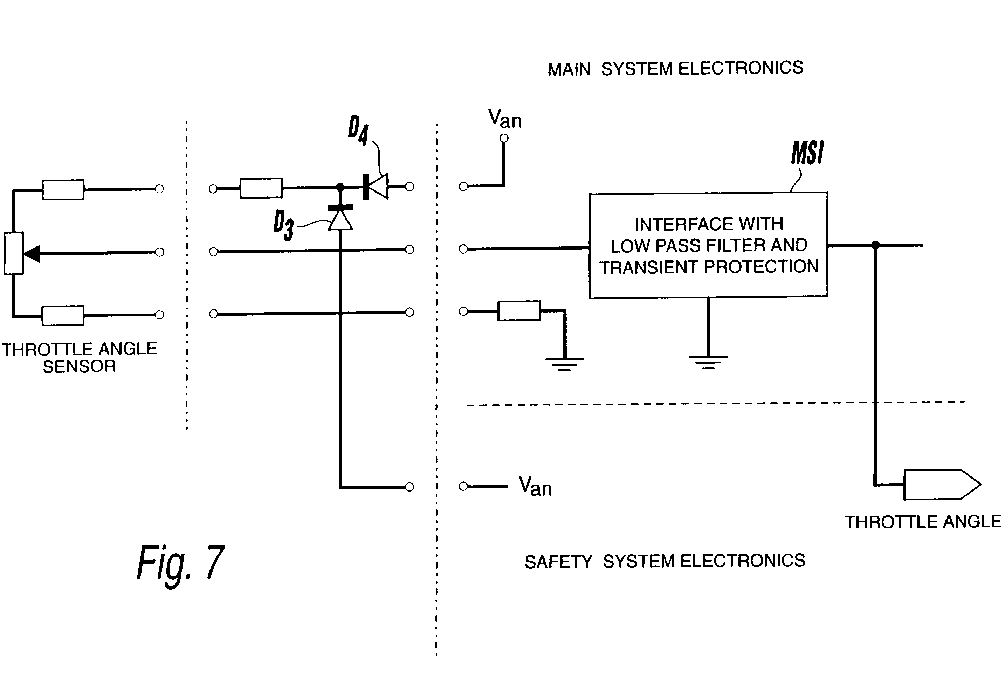

The analog signal for the throttle valve angle can as shown in fig. 7 be retrieved from the main system. Since the reference voltage for the throttle valve angle is supplied by the main control unit ECU 6, the electronics in the safety system must supply the reference voltage when the main system is out of operation and two diodes D₃, D₄ can be used for this purpose. The reference voltage for the A/D converter for the control units ECU 6, 13 can be affected when diodes are used. Both the A/D converter's and the sensor's reference voltages must therefore be retrieved from the diodes' N-side, which will also be the case for all other potentiometer sensors, for example the gear position sensors. The transient protection of the interface MSI must be changed in order to avoid loss of the sensor signal if the power to the main system is short-circuited to earth.

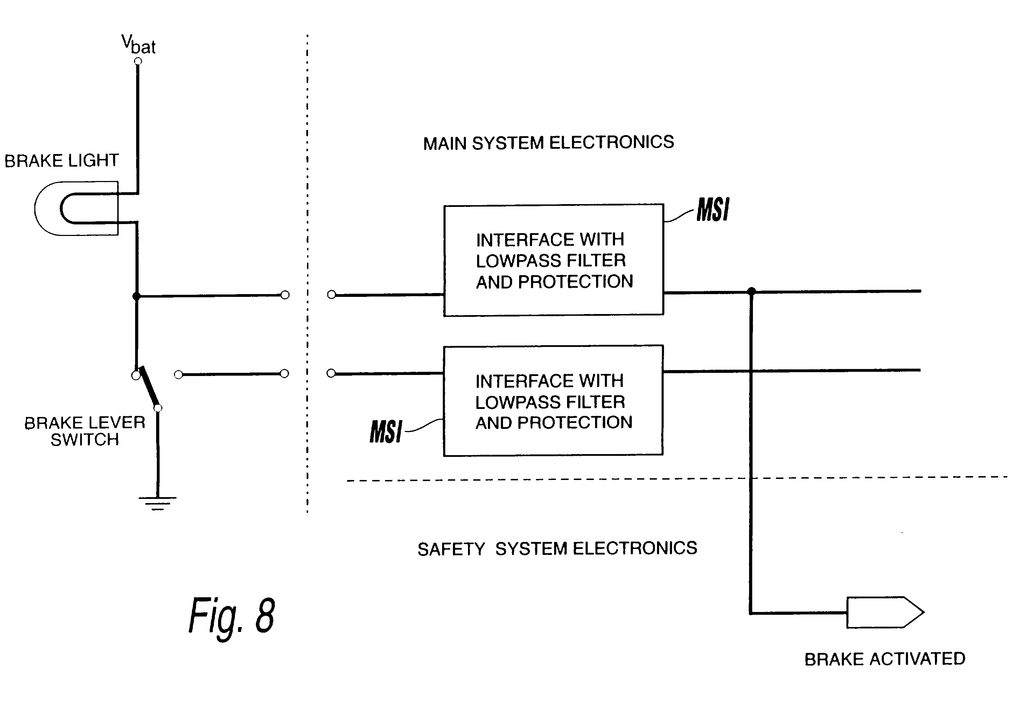

The sensor signal for the foot brake is in the form of an on/off signal and can, as shown in fig. 8, be retrieved from the existing brake light switch in the car. For the safety system one input is sufficient, while the main system has two. A disadvantage of retrieving the brake light signal from the brake light switch is loss of the signal if both the brake lights in the car have failed. This is not a problem for the main system, since the main system can detect the error and react accordingly. The safety system, however, uses brake light signals in order to indicate fast clutch engagement at low speeds. The transient protection of the interface MSI must be replaced.

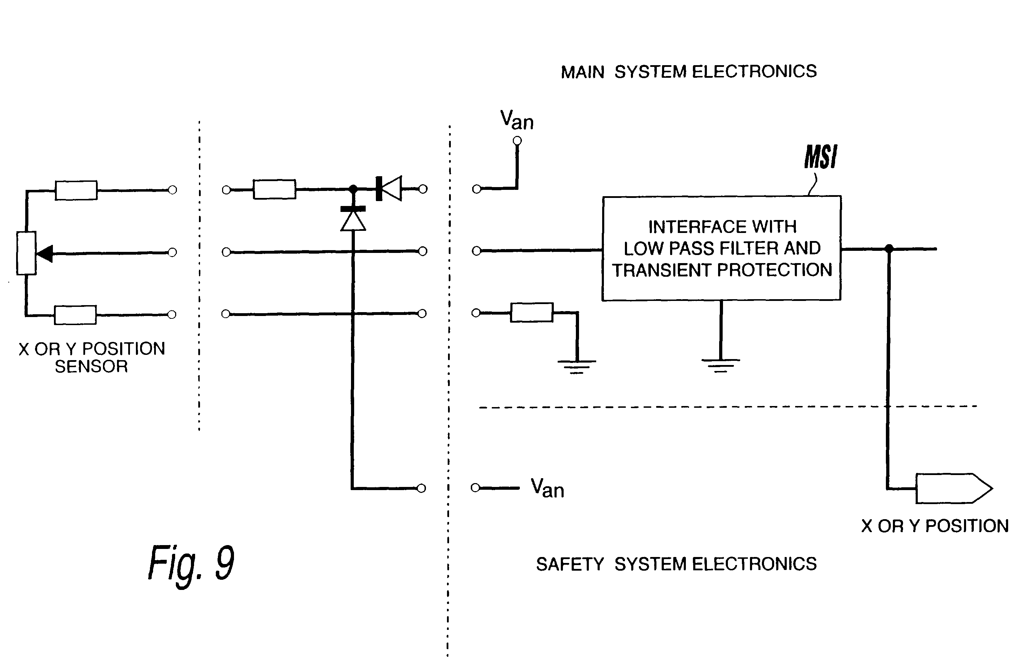

The gear position sensor is used to determine engagement/disengagement during a gearshift. A position signal x can be sufficient, even if both x and y positions ought to be included in the control units ECU 6, 13 if there are sufficient unused control inputs. These positions can, as shown in fig. 9, be retrieved from the main system in the same way as the throttle valve angle.

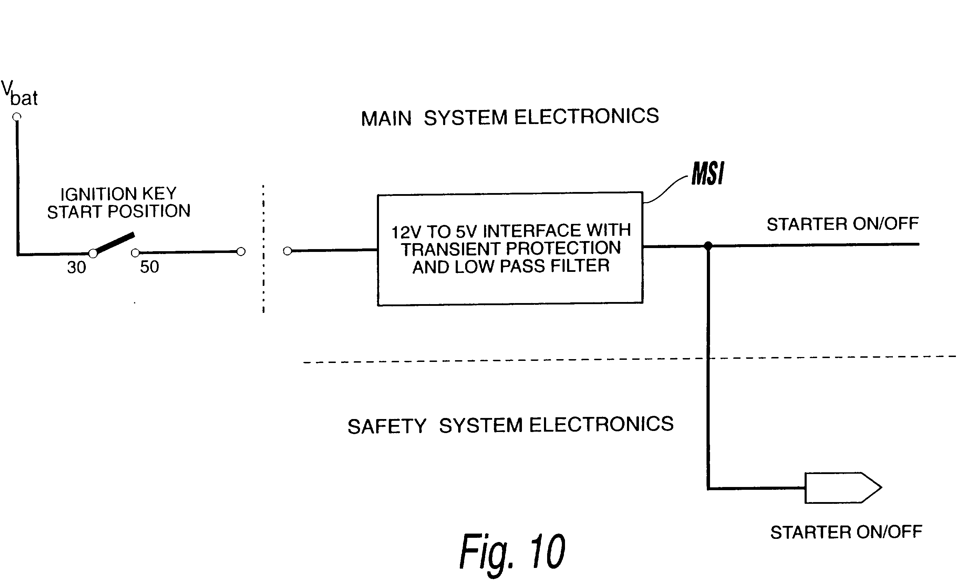

In order to prevent the hydraulic power unit HPU (the pump motor 2) and the starter motor from being in activity at the same time, an on/off signal for the starter motor can, as shown on fig. 10, enable the backup control unit ECU 6 to keep the hydraulic power unit HPU out of operation during engine start.

The backup control unit must receive a signal which indicates whether the ignition is on or off in order to have full control over its own power state (on/off). When the ignition is on the backup control unit ECU 13 must be capable of delaying the power to the safety valves, i.e. the valves 10, 11 and 12, thus ensuring that the safety system in no way influences the normal initiation of the power supply to the main system when the safety system is not in control. When the ignition is off, the backup control unit ECU 13 must be capable of delaying its own power disconnection in order to ensure reliable clutch engagement when it has control.

As mentioned, the backup control system ECU 13 may require a serial input line in order to receive data from an operator terminal. An additional digital input determines whether the logger or the terminal is connected to the serial communication interface, i.e. which protocol should be employed. Furthermore a signal is provided in order to indicate whether the backup control unit really is in control of the actuator 5. The need for this input is disputed, but if it is implemented as shown in figure 3, the signal has to be converted from 12 volts to 5 volts. For communication with the main system two digital inputs and two outputs to the main system are included. One of these is an interrupt line and the other is to receive data. As an option some diagnostic inputs to the backup control unit can be used in order to supply data concerning output drivers (valves, hydraulic power unit HPU, start lock and auxiliary driver output). These inputs are retrieved from the electronics in the safety system and do not require any extra input from the main system. Finally the backup control unit can be equipped with extra analog and digital outputs for logging during development of, for example, control software for the safety system, such as for clutch position and for any future changes.

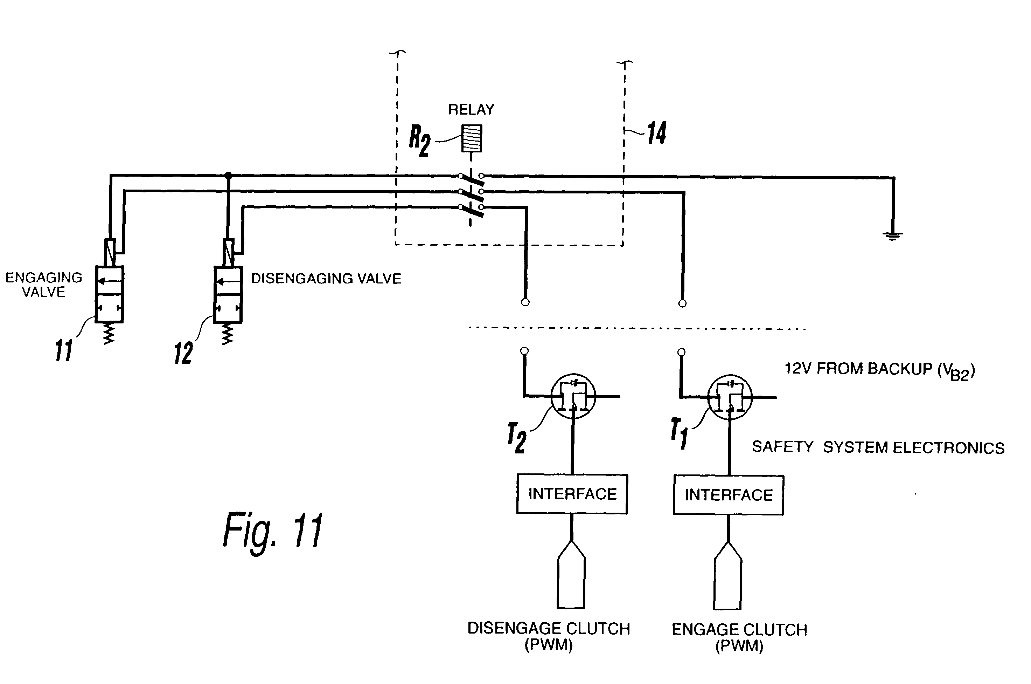

With reference to fig. 11 the output signals will now be described in more detail. The valves 11, 12 for engagement and disengagement of the clutch can be controlled by the backup control unit ECU 13 with two switches in the safety switch device 14. When the safety system is in control, i.e. the switch device with a relay R₂ as illustrated in figure 3 is activated, the backup control unit ECU 13 can engage and disengage the clutch by activating two transistor switches T₁, T₂ for engagement and disengagement. The transistor switches T₁, T₂ are selected in order to permit pulse width modulation (PWM) by control of the valves 11, 12. By means of pulse width modulation a suitable control is obtained of the engagement and disengagement of the clutch. It should be noted that both lines to each valve pass through the relay R₂. This is in order to prevent the valves 11, 12 from being activated in the event of an erroneous short circuit.

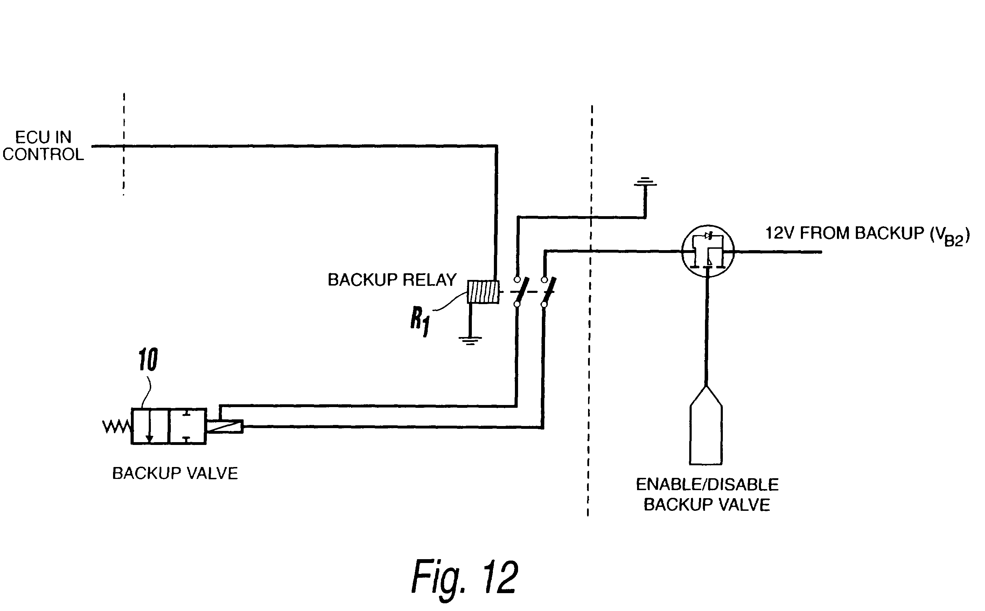

When the main system starts under normal conditions, the safety system must prevent undesirable activation of the safety valve or shut-off valve 10 and consequently the actuator before the main system takes over control of the shut-off valve 10 via the signal "ECU in control", as shown in fig. 12.

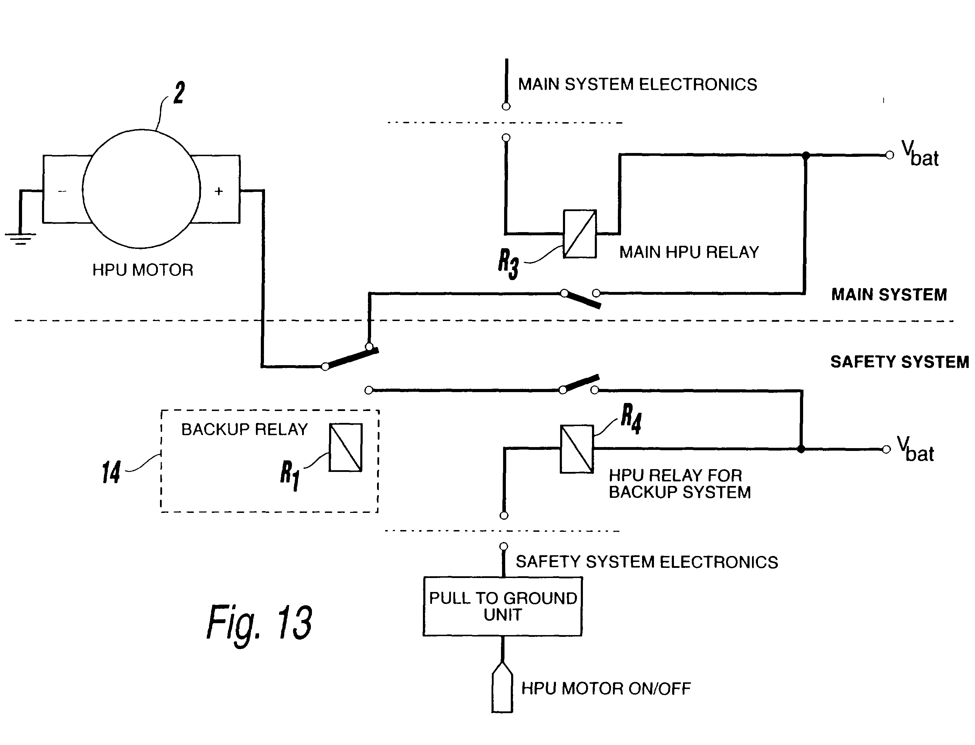

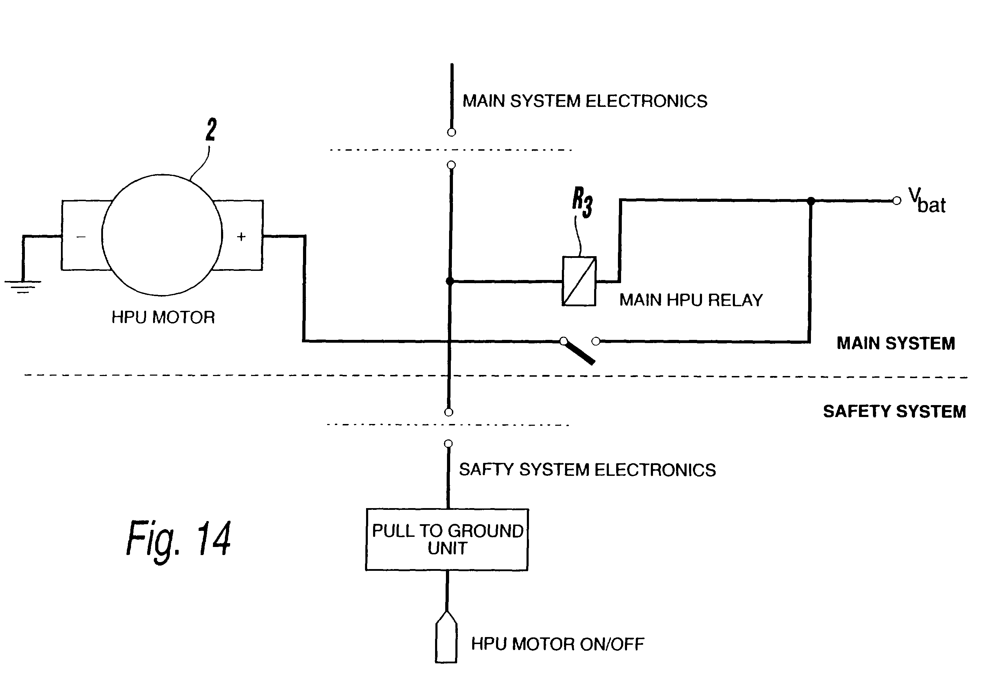

The safety system can also control the hydraulic power unit HPU, i.e. the pump motor 2, in the event of error in the main system. In order to ensure that the safety system and the main system work independently, the switch device 14 can, as shown in fig. 13, switch control of the hydraulic power unit HPU to the safety system. The high engine rating which is involved, however, indicates that a separate relay should be used. The main system's hydraulic power unit relay or main HPU relay R₃ is circumvented when the state of the HPU relay R₃ is undefined for an error in the main system or for a failure in the power unit relay. The backup control unit ECU 13 thus controls HPU by means of a second HPU relay R₄ for the safety system in the same way as for the main system. The connections between the safety switch device 14 and the second HPU relay R₄ for the safety system can be eliminated by using the main HPU relay R₃ as shown in fig. 14, but this option is less attractive from a safety point of view.

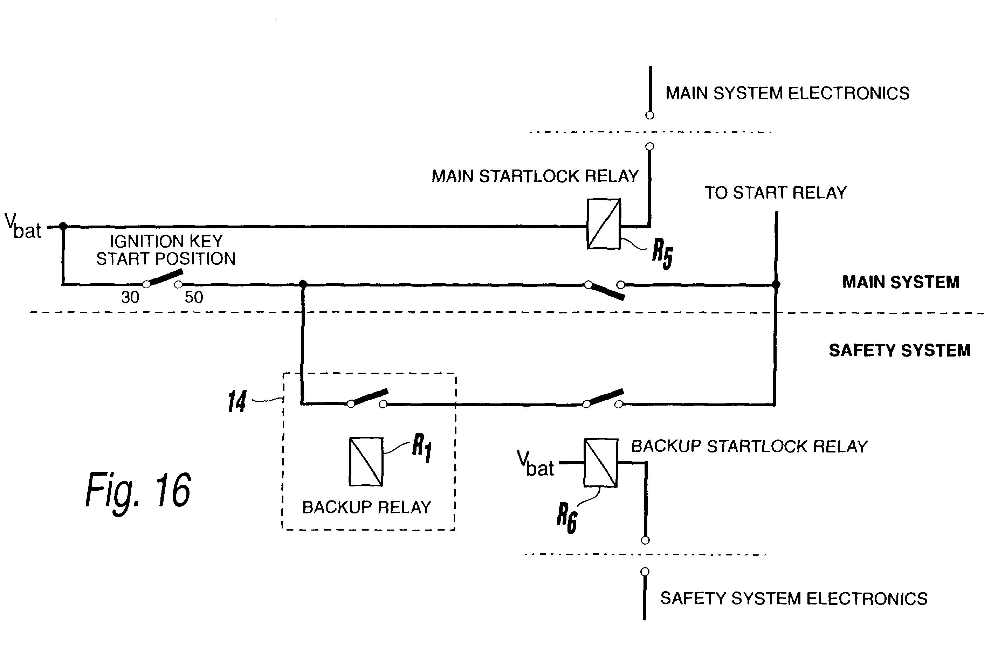

In order to guarantee that the engine starts in the event of a failure of the main system, the start lock relay R₅ of the main system must be circumvented. In order to prevent the car from starting while it is in gear, a second relay R₆ can be activated in the same way as for the main system. Due to high current it may be preferable to use an other relay than the main start lock relay R₅ for similar reasons, as mentioned above in connection with the hydraulic power unit HPU. In order to eliminate one of the safety switch connections, the design can be slightly modified, as shown in fig. 16, but this modification may block the safety system's control of the start lock function in the event of the failure of the main system's start lock relay R₅ (short circuit). In each case a start lock output signal may prove to be unnecessary.

A digital output will be capable of giving the main control unit ECU 6 information concerning the error status in the safety system, thus enabling the main system to warn the driver in the event of failure of the safety system. Thus the main control unit ECU 6 acts as a watchdog for the safety system. An interrupt output to the main system provides communication control and time control. A serial line provides real time information to the logging system. In this case the output specifications will be the same as for the main system's serial output. A serial line is also necessary for the communication with the operator terminal. Since a selected backup control unit ECU 13 only has one serial output, the serial output must be multiplexed, e.g. with a switch or the like. Alternatively a serial communication output on a parallel gate pin can be implemented as software. A digital output gives the logger a signal for synchronization of data from the main system and the safety system. Moreover digital auxiliary outputs and other outputs can also be provided, for example driver outputs for possible future requirements.

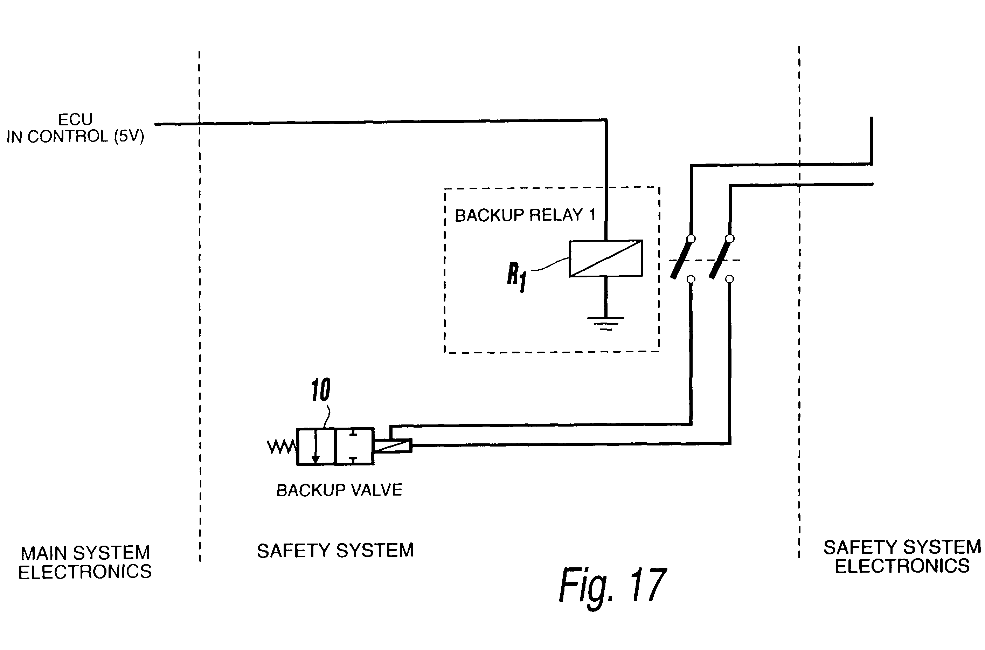

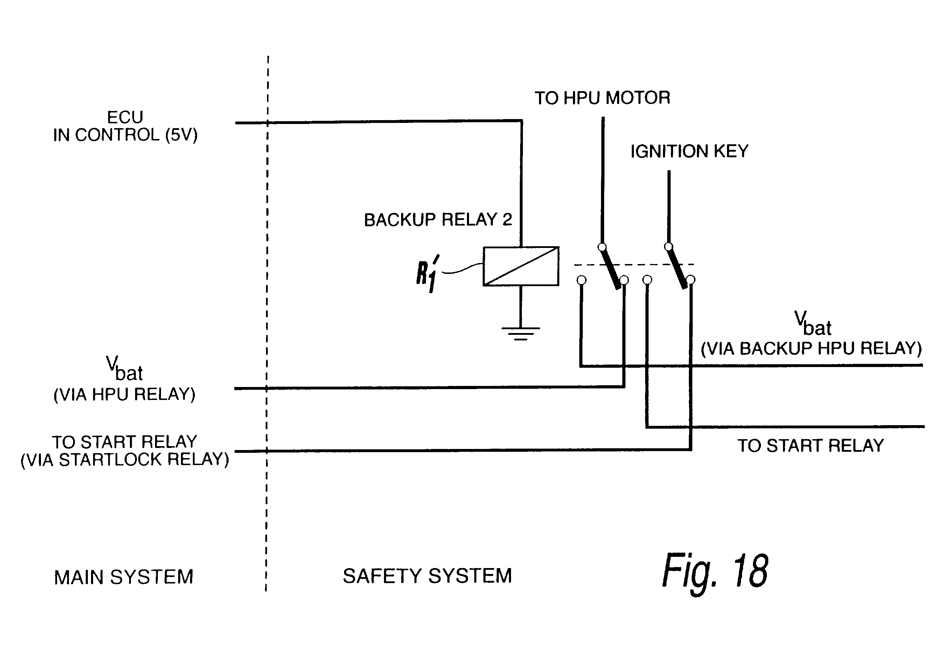

The safety switch device 14 which is provided in the safety system will now be described in more detail with reference to figs. 17 and 18. The use of a safety switch device has been mentioned in various connections in the above. Whether the switch device 14 should be used or whether some types of transistor drivers can be used is open to discussion, but the chosen embodiment must ensure galvanic isolation between critical parts in the main system and the safety system.

The following description of the design of the safety switch device 14 in fig. 3 is included in order to illustrate how to prevent the relay circuits of the switch device from becoming too complicated. This can be achieved by dividing the relay R₁ in fig. 17 into two separate relays. Consequently a second safety relay R'₁ shown in fig. 18 can deal with the pump motor in the power unit HPU and the starter motor, both of which require a substantial amount of power. As before, the backup or safety relay R₁ now deals with the safety valve or shut-off valve 10. When the system is in operation, the 5 volt connection ("ECU in control") keeps the safety relay R₁ in a specific state. When the main system is no longer functioning correctly, this line is closed and the safety relay R₁ activates the shut-off valve 10. Both leads to the safety valve 10 pass through the safety relay R₁, which prevents the valve from being activated due to inadvertent short circuits, as in the case of the valves 11, 12 for engagement and disengagement. The second safety relay R₁ can be of a similar type. In the event of failure in the main system, the second safety relay R₁ connects the HPU motor to the backup HPU relay R₄ (fig. 13) for the hydraulic power unit HPU and the start position for the ignition key directly to the backup start lock relay R₆. Alternatively, the safety relay R'₁ can be activated on the same line as the relay R₂ in figure 3 or can even be combined with this relay. In order to ensure reliable isolation of the safety system from the main system, the safety relays can be mechanical. The same applies to the relay R₂ in figure 3. The backup relay R₄ for the hydraulic power unit HPU can either be a switch of a mechanical or an electronic type. An electronic switch is preferable since the backup relay R₄ for the hydraulic power unit ought to be switched on and off continuously, even when the safety system is not in control.

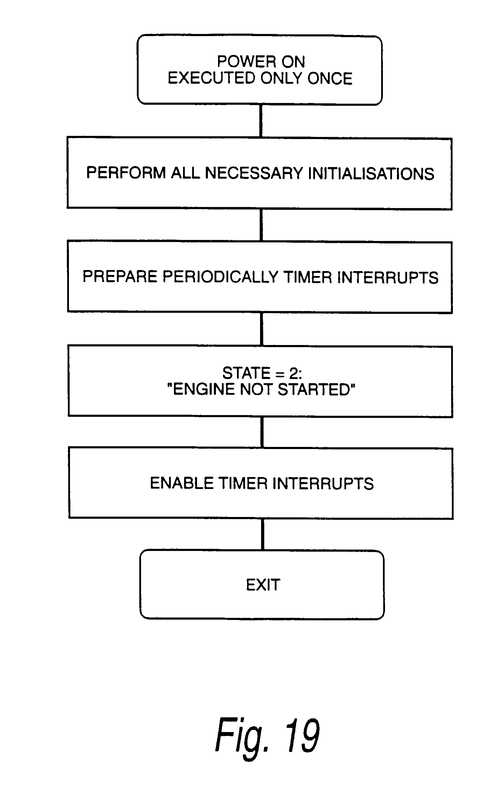

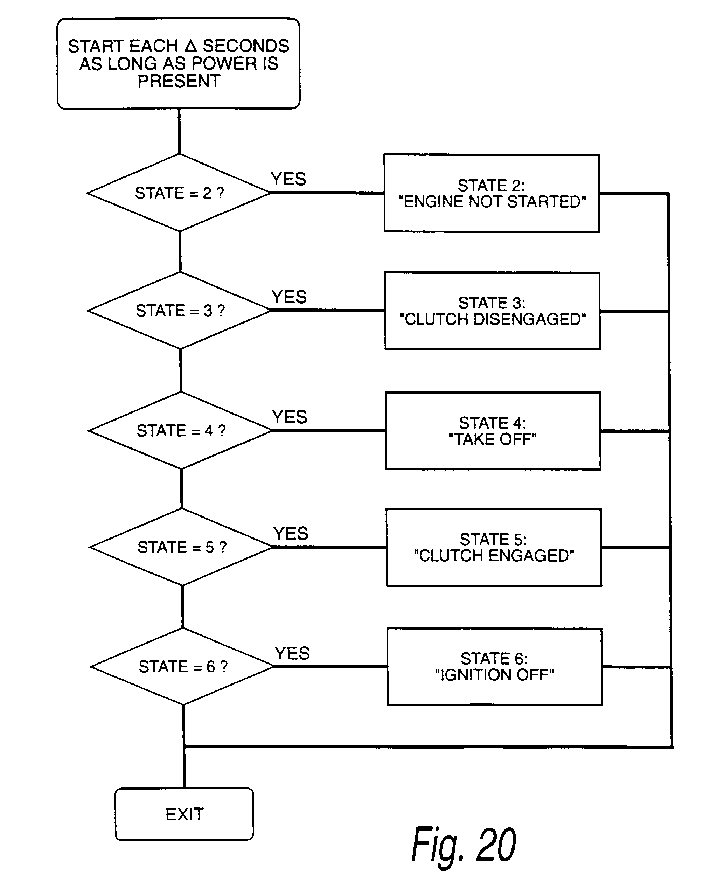

The control logic used in the safety system will now be described in more detail with reference to the flow charts in figures 19-25. The control logic is implemented as a continuously running state machine SM in the backup control unit ECU 13. The state machine SM contains the following states:
1) Initialization
2) Engine not started
3) Clutch disengaged
4) Driving off from zero speed
5) Clutch engaged
6) Ignition off

Each of these states consists of an operational part and a decision part. The operational part of a state in the state machine SM is responsible for the operational control tasks for the backup control unit ECU 13 in relation to an active state. The operational part of a state in the state machine SM is preferably executed as logic control algorithms. Due to the fact that in the method according to the invention a continuous detection is employed of clutch speed, engine speed and throttle activation, amongst other things, the logic control algorithms are executed as continuous algorithms. The decision part of a state in the state machine SM is executed in the form of decision algorithms which decide whether an existing state should be maintained or whether the state machine SM should shift to another state.

The flow chart in fig. 19 shows what happens when the power is switched on, but the engine is nevertheless not started, i.e. state 2. The flow chart in fig. 5 shows the routine 'Timer interrupt/State control". This routine is started periodically by means of internal clocks or timers and the interrupt system of the microcontroller in ECU 13. The initialization of the state machine SM is thereby over and a specific state has been determined.

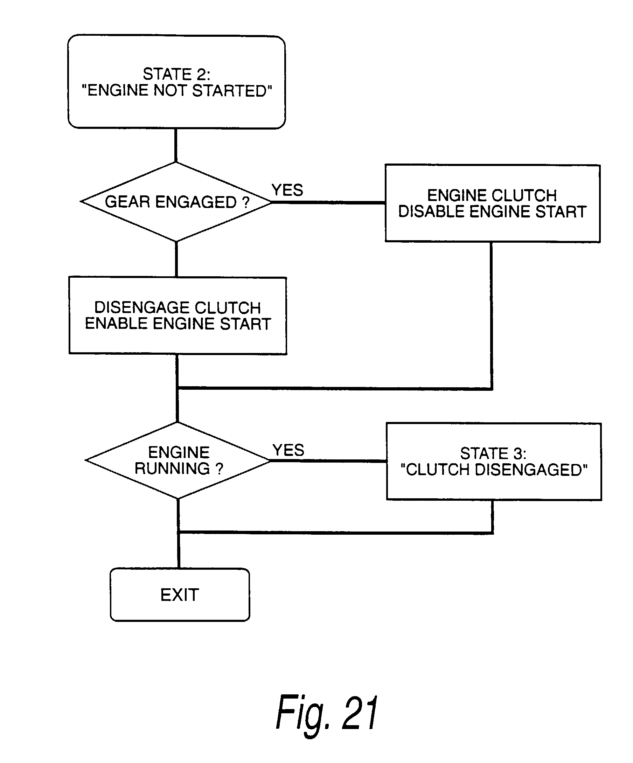

In fig.21 the flow chart for state 2 "Engine not started" is illustrated and it shows how the use of the decision algorithms "Gear engaged?" or "Engine running?" result in an operational action or a change of state, in this case to state 3 "Clutch disengaged".

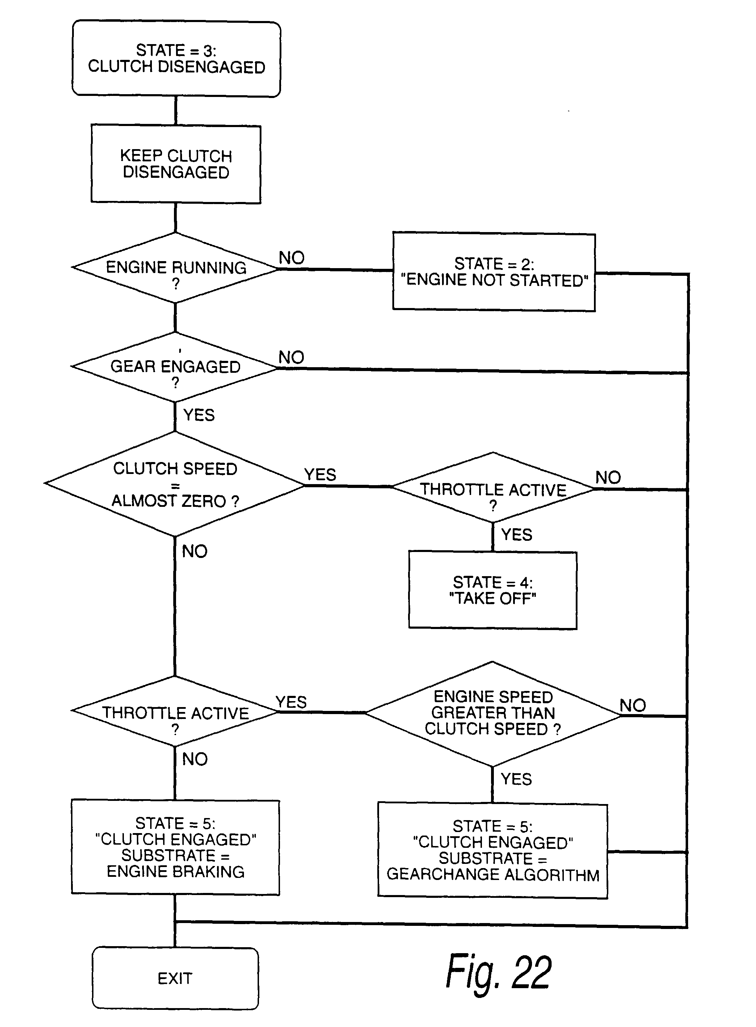

The flow chart in figure 22 illustrates the course of the operational control tasks in state 3 "Clutch disengaged", the decision algorithms used in this connection and how they affect the transfer to state 5 "Clutch engaged". This state 5 has two substates, viz. "Engine braking" and "Gear change".

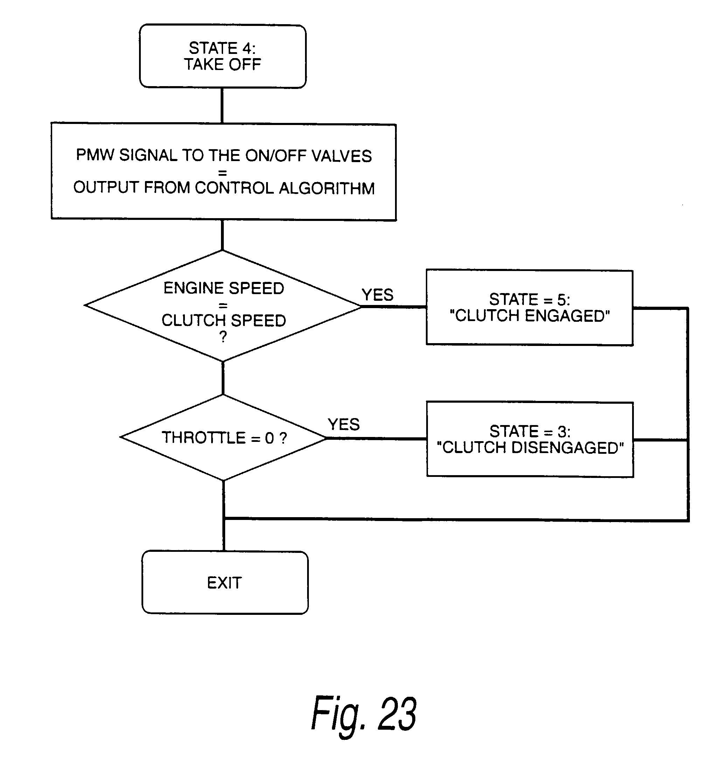

The flow chart in figure 23 illustrates the course of the control process when state 4 "Drive off from zero speed" exists. In this case the control algorithm causes a pulse width modulated signal to be transmitted to the on/off valves 11, 12, and if the engine speed is now equal to the clutch speed, state 4 shifts to state 5 "Clutch engaged". Otherwise the throttle activation is questioned, and if this is zero the decision algorithm effects a transfer to state 3 "Clutch disengaged".

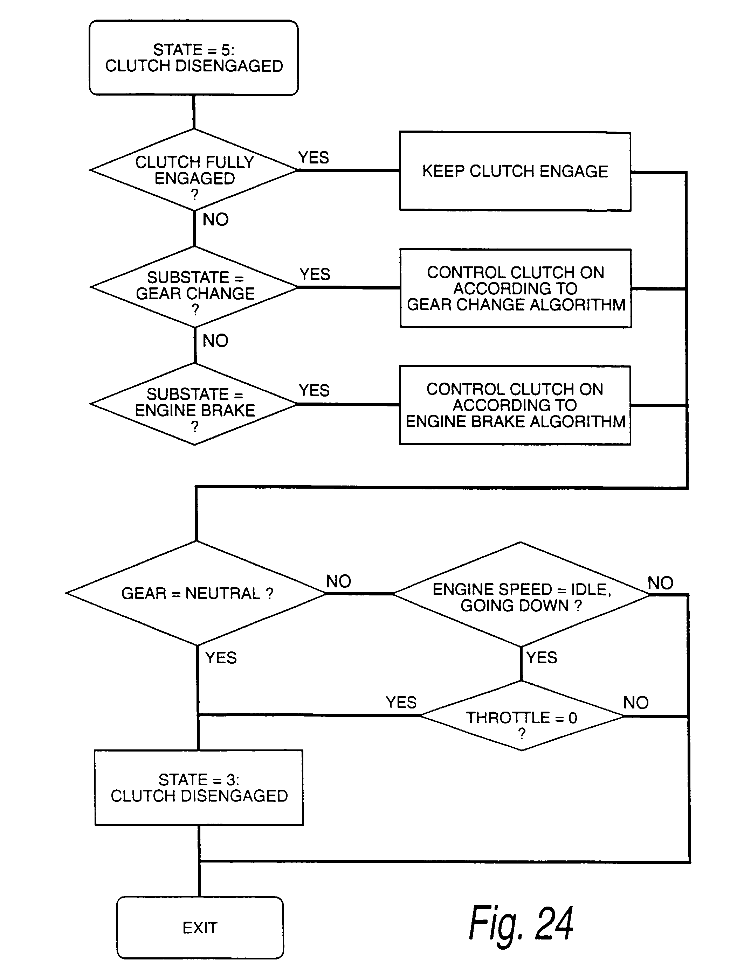

The flow chart in figure 24 illustrates the course from state 5 "Clutch engaged". If in this case the clutch is not fully engaged, the question is asked whether a substate "Gear change" exists, and if this is the case the clutch is controlled according to a control algorithm for gear change. If, on the other hand, no substate "Gear change" exists, an inquiry is made concerning the substate "Engine braking" and if this state exists, the clutch is controlled according to a motor brake algorithm. It is reasonable to assume that state 5 "Clutch engaged" sooner or later will shift to state 3 "Clutch disengaged".

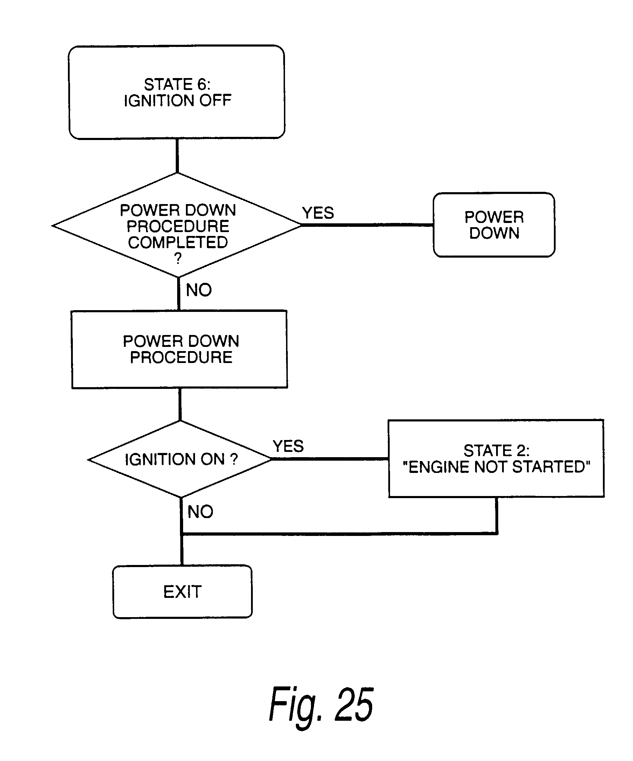

Finally figure 25 illustrates state 6 "Ignition off'.

In theory the state machine SM and the control logic can be "hardware-orientated", i.e. designed as an electrical network and thus preferably implemented in VLSI technology on a special control logic chip. However, according to a preferred embodiment the state machine is implemented in the form of algorithms and routines written in a suitable programming language, for example C, or possibly an object-oriented language and thereafter implemented in the backup control unit ECU 13.

Most safety systems in cars have traditionally been designed as critical, based on a low error probability. In the safety system and the method according to the present invention this traditional design has been abandoned and a safety system has been provided which will be capable of taking over the control of the clutch virtually instantaneously or at least in the course of 10 ms at the most after a major error has been detected in either the main control unit or the actual clutch activation.

In the safety system according to the invention the object is achieved that the clutch can be controlled via the on/off valves with a minimum of sensor information. At the same time the information which is detected and processed in the safety system according to the present invention is sufficient to give the driver control of the car in such a manner that he is not scared to continue driving in the belief that this will be dangerous either for the car, himself or both. The safety system according to the present invention takes account of the fact that an error situation can suddenly occur, taking the driver by surprise, and it also takes into consideration the fact that the driver has no previous experience of a situation of this kind. Even though the driving comfort in such an error situation can be considerably reduced, the car will continue to react to throttle activation, brakes and gear lever, with the result that an average car driver with no previous experience of the situation will still feel that he is in control of the car and can drive on.

## Claims

1. A safety system in a clutch management system CMS for an automatically activated clutch, wherein the clutch is located between the engine and the gearbox in a car and is operated by a hydraulic actuator (5), the clutch being connected to the gearbox via an input shaft, wherein the clutch management system CMS comprises a hydraulic power unit HPU, a proportional flow valve or main valve (4) which controls the flow in the actuator (5) which regulates the position of the clutch's thrust bearing and thereby the torque transferred through the clutch, and an electronic main control unit ECU (6) which controls the position of the actuator (5) via the main valve (4) according to algorithms stored in the ECU (6) on the basis of input values from sensors which continuously detect the gearbox input shaft speed, actuator position, engine speed and throttle activation, and whether or not the brakes are activated, together with gear position,
characterized in that the safety system comprises a first valve (10) which is connected to the main valve (4) and which shuts off the flow in the actuator, thereby neutralizing the main control unit's ECU (6) control of the actuator's (5) position in order to prevent an erroneous clutch movement, a second valve (11) which empties the actuator (5) at a controlled rate, a third valve (12) which supplies the actuator (5) at a controlled rate, the valves (11, 12) being connected to the hydraulic power unit HPU, and an electronic backup control unit ECU (13) which in the event of the detection of an error condition in the clutch management system controls the position of the actuator (5) via the second and third valves (11, 12) according to algorithms stored in the ECU (13) and on the basis of input values for sensors which continuously detect the gearbox input shaft speed, engine speed and throttle activation, whether or not the brakes are activated, together with gear position.

2. A safety system according to claim 1,
characterized in that the hydraulic power unit HPU comprises an oil reservoir (1), an oil pump (2) and a hydraulic accumulator (3).

3. A safety system according to claim 1,
characterized in that one or more of the first, second and third valves (10, 11, 12) is a continous or slide valve.

4. A safety system according to claim 1,
characterized in that one or more of the first, second and third valves (10, 11, 12) is an on/off valve.

5. A safety system according to claim 1,
characterized in that the main control unit ECU (6) comprises digital outputs for communication, control and logging.

6. A safety system according to claim 1, .
characterized in comprising a safety switch device (14) which prevents the safety system from manoeuvring the second and third valves (11, 12) unless the first valve (10) is really switched off.

7. A safety system according to claim 1,
characterized in that the backup control unit ECU (13) is integrated in the same housing as the main control unit ECU (6).

8. A safety system according to claim 1,
characterized in that the backup control unit ECU (13) comprises at least one dynamic memory, and a microcontroller with a microprocessor.

9. A safety system according to claim 1,
characterized in that the backup control unit comprises digital outputs for control, communication and logging.

10. A safety system according to claim 1,
characterized in that the detection functions of the backup control unit ECU (13) are implemented with the same sensors which attend to the detection functions of the main control unit ECU (6).

11. A safety system according to claim 1,
characterized in that the second and third valves (11, 12) are controlled from the backup control unit ECU (13) by a pulse width modulated (PWM) signal.

12. An electronic backup control unit ECU (13) for a safety system according to claims 1-11, characterized in that the backup control unit comprises a continously running state machine SM.

13. An electronic backup control unit ECU (13) according to claim 10, characterized in that the state machine comprises the following states:
1) Initialization
2) Engine not started
3) Clutch disengaged
4) Driving off from zero speed
5) Clutch engaged
6) Ignition off
each state including an operational part and a decision part.

14. A method for control in a safety system in a clutch management system CMS for an automatically activated clutch, wherein the clutch is located between an engine and a gearbox in a car and is operated by a hydraulic actuator (5), the clutch being connected to the gearbox via an input shaft, wherein the clutch management system CMS comprises a hydraulic power unit HPU, a proportional flow valve or main valve (4) which controls the flow in the actuator (5), which regulates the position of the clutch's thrust bearing and thereby the torque transferred through the clutch, and an electronic main control unit ECU (6) which controls the position of the actuator (5) via the main valve (4) according to algorithms stored in the ECU (6) on the basis of input values from sensors which continuously detect gearbox input shaft speed, actuator position, engine speed and throttle activation, whether or not the brakes are activated, together with gear position,
characterized in providing an electronic backup control unit ECU (13) which automatically takes over control of the clutch management system CMS when an error state is detected therein, the control method comprising the following steps: continuously detecting gearbox input shaft speed, engine speed and throttle activation, detecting whether or not the brakes are activated, detecting gear position, supplying a digital output signal in order to control the operation of the hydraulic power unit HPU, supplying a digital output signal in order to permit engine start, and receiving a digital input signal which indicates whether or not a starter motor is active, thus ensuring that the hydraulic power unit and the starter motor are not simultaneously activated.

15. A method according to claim 14, characterized in receiving data from an operator terminal via a serial input line.

16. A method for control in a safety system in a clutch management system CMS for an automatically activated clutch, wherein the clutch is located between an engine and a gearbox in a car and is operated by a hydraulic actuator (5), the clutch being connected to the gearbox via an input shaft, wherein the clutch management system CMS comprises a hydraulic power unit HPU, a proportional flow valve or main valve (4) which controls the flow in the actuator (5), which regulates the position of the clutch's thrust bearing and thereby the torque transferred through the clutch, and an electronic main control unit ECU (6) which controls the position of the actuator (5) via the main valve (4) according to algorithms stored in the ECU (6) on the basis of input values from sensors which continuously detect gearbox input shaft speed, actuator position, engine speed and throttle activation, whether or not the brakes are activated, together with gear position,
characterized in providing an electronic backup control unit ECU (13) which automatically takes over control of the clutch management system CMS when an error state is detected therein, and implementing a continuously running state machine SM in the backup control unit ECU (13), the control method comprising the following steps: continuously detecting gearbox input shaft speed, engine speed and throttle activation, detecting whether or not the brakes are activated, detecting gear position, supplying a digital output signal in order to control the operation of the hydraulic power unit HPU, supplying a digital output signal in order to permit engine start, and receiving a digital input signal which indicates whether or not a starter motor is active, thus ensuring that the hydraulic power unit and the starter motor are not simultaneously activated.

17. A method according to claim 16,
characterized in receiving data from an operator terminal via a serial input line.

18. A method according to claim 16,
characterized by indicating to the backup control unit ECU (13) whether or not it is in control of the actuator (5).

19. The method according to claim 16,
characterized in providing the state machine SM with the following states:
1) Initialization
2) Engine not started
3) Clutch disengaged
4) Driving off from zero speed
5) Clutch engaged
6) Ignition off,
each state comprising an operational part and a decision part.

20. A method according to claim 19,
characterized in applying the operational part of a state in the state machine SM to operational control tasks related to an active state.

21. A method according to claim 20,
characterized in designing the operational part of a state in the state machine SM in the form of logic control algorithms, preferably as continuous algorithms.

22. A method according to claim 19,
characterized in designing the decision part of a state in the state machine SM in the form of decision algorithms which decide whether an existing state should continue or whether the state machine should shift into another state.

## Patentansprüche

1. Ein Sicherheitssystem in einem Kupplungsmanagement-System CMS für eine automatisch betätigte Kupplung, wobei die Kupplung zwischen dem Motor und dem Getriebe eines Fahrzeugs angeordnet ist und durch ein hydraulisches Stellglied (5) betätigt wird; die Kupplung ist mit dem Getriebe über eine Eingangswelle verbunden, und zum Kupplungsmanagement-System CMS gehört eine Hydraulikeinheit HPU, ein Proportionalventil oder Hauptventil (4), das den Ölfluß im Stellglied (5) steuert, welches seinerseits die Stellung des Kupplungsdrucklagers und damit das durch die Kupplung übertragene Drehmoment steuert, und eine elektronische Hauptsteuereinheit ECU (6), welche die Stellung des Stellglieds (5) vermittels des Hauptventils (4) gemäß in der ECU (6) abgespeicherten Algorithmen auf der Grundlage der Signalwerte der Eingangssignale von Sensoren einregelt, die kontinuierlich die Drehzahl der Getriebeeingangswelle, die Stellglied-Stellung, die Motordrehzahl und die Drosselklappenbetätigung ermitteln, ebenso wie die Schalthebelstellung und den Betätigungszustand der Bremsen,
und dadurch charakterisiert, daß hierzu ein erstes Ventil (10) gehört, welches mit dem Hauptventil (4) verbunden ist und die Ölzufuhr zum Stellglied unterbricht, was den Regeleinfluß der Hauptsteuereinheit ECU (6) auf die Stellung des Stellglieds (5) neutralisiert, um fälschliche Kupplungsbewegung zu verhindern, ein zweites Ventil (11), welches das Stellglied (5) bei einer kontrollierten Rate entleert, ein drittes Ventil (12), welches das Stellglied (5) bei einer kontrollierten Rate mit Öl versorgt, und wobei die Ventile (11, 12) mit der Hydraulikeinheit HPU und einer elektronischen Bereitschafts-Steuereinheit ECU (13) verbunden sind, welche im Fall der Ermittlung eines Störungszustandes im Kupplungsmanagement-System die Stellung des Stellglieds (5) mittels des zweiten und dritten Ventils (11, 12) einregelt auf Grundlage von in der ECU (13) abgespeicherten Algorithmen und der Signalwerte der Eingangssignale von Sensoren, die kontinuierlich die Drehzahl der Getriebeeingangswelle, die Motordrehzahl und die Drosselklappenbetätigung ermitteln, ebenso wie die Schalthebelstellung und den Betätigungszustand der Bremsen.

2. Ein Sicherheitssystem gemäß Anspruch 1,
das dadurch charakterisiert ist, daß zu einer Hydraulikeinheit HPU ein Ölreservoir (1), eine Ölpumpe (2) und ein Druckspeicher (3) gehören.

3. Ein Sicherheitssystem gemäß Anspruch 1,
das dadurch charakterisiert ist, daß es sich bei einem oder mehreren des ersten, zweiten oder dritten Ventils (10, 11, 12) um ein kontinuierlich öffnendes und schließendes Ventil handelt.

4. Ein Sicherheitssystem gemäß Anspruch 1,
das dadurch charakterisiert ist, daß es sich bei einem oder mehreren des ersten, zweiten oder dritten Ventils (10, 11, 12) um ein plötzlich öffnendes und schließendes Ventil handelt.

5. Ein Sicherheitssystem gemäß Anspruch 1,
das dadurch charakterisiert ist, daß zur Hauptsteuereinheit ECU (6) digitale Ausgänge für Kommunikation, Regelung und Aufzeichnung gehören.

6. Ein Sicherheitssystem gemäß Anspruch 1,
das dadurch charakterisiert ist, daß hierzu eine Schaltvorrichtung im Sicherheitskreis (14) gehört, die verhindert, daß vom Sicherheitssystem das zweite und dritte Ventil (11, 12) bewegt wird, solange das erste Ventil (10) nicht völlig geschlossen ist.

7. Ein Sicherheitssystem gemäß Anspruch 1,
das dadurch charakterisiert ist, daß die Bereitschafts-Steuereinheit ECU (13) in das gleiche Gehäuse wie die Hauptsteuereinheit ECU (6) integriert ist.

8. Ein Sicherheitssystem gemäß Anspruch 1,
das dadurch charakterisiert ist, daß zur Bereitschafts-Steuereinheit ECU (13) zumindest ein dynamischer Speicher und ein Mikrocomputer mit Mikroprozessor gehört.

9. Ein Sicherheitssystem gemäß Anspruch 1,
das dadurch charakterisiert ist, daß zur Bereitschafts-Steuereinheit digitale Ausgänge für Regelung, Kommunikation und Aufzeichnung gehören.

10. Ein Sicherheitssystem gemäß Anspruch 1,
das dadurch charakterisiert ist, daß die von der Bereitschafts-Steuereinheit ECU (13) geleisteten Ermittlungsfunktionen mittels der gleichen Sensoren durchgeführt werden, die auch für die von der Hauptsteuereinheit ECU (6) geleisteten Ermittlungsfunktionen genutzt werden.

11. Ein Sicherheitssystem gemäß Anspruch 1,
das dadurch charakterisiert ist, daß das zweite und das dritte Ventil (11, 12) von der Bereitschafts-Steuereinheit ECU (13) mit einem impulsbreitenmodulierten Signal (PWM) angesteuert wird.

12. Eine elektronische Bereitschafts-Steuereinheit ECU (13) für ein
Sicherheitssystem gemäß Ansprüchen 1 - 11, das dadurch charakterisiert ist, daß zur Bereitschafts-Steuereinheit eine kontinuierlich laufende Zustandsmaschine SM gehört.

13. Eine elektronische Bereitschafts-Steuereinheit ECU (13) gemäß Anspruch 10, die dadurch charakterisiert ist, daß die Zustandsmaschine über die folgenden Zustände verfügt:
1) Initialisierung
2) Motor nicht angesprungen
3) Kupplung ausgekuppelt
4) Anfahren aus dem Stand
5) Kupplung eingekuppelt
6) Zündung aus
wobei jeder Zustand in einen operativen und einen dezisionären Teil untergliedert ist.

14. Eine Methode für eine Regelung in einem Sicherheitssystem in einem Kupplungsmanagement-System CMS für eine automatisch betätigte Kupplung, wobei die Kupplung zwischen einem Motor und einem Getriebe eines Fahrzeugs angeordnet ist und durch ein hydraulisches Stellglied (5) betätigt wird; die Kupplung ist mit dem Getriebe über eine Eingangswelle verbunden, und zum Kupplungsmanagement-System CMS gehört eine Hydraulikeinheit HPU, ein Proportionalventil oder Hauptventil (4), das den Ölfluß im Stellglied (5) steuert, welches seinerseits die Stellung des Kupplungsdrucklagers und damit das durch die Kupplung übertragene Drehmoment steuert, und eine elektronische Hauptsteuereinheit ECU (6), welche die Stellung des Stellglieds (5) vermittels des Hauptventils (4) gemäß in der ECU (6) abgespeicherten Algorithmen auf der Grundlage der Signalwerte der Eingangssignale von Sensoren einregelt, die kontinuierlich die Drehzahl der Getriebeeingangswelle, die Stellglied-Stellung, die Motordrehzahl und die Drosselklappenbetätigung ermitteln, ebenso wie die Schalthebelstellung und den Betätigungszustand der Bremsen,
und dadurch charakterisiert, daß eine elektronische Bereitschafts-Steuereinheit ECU (13) bereitgestellt ist, welche die Regelung des Kupplungsmanagement-Systems (CMS) im Fall der Ermittlung eines Störungszustandes in selbigen automatisch übernimmt, wobei hierzu folgende Aufgaben gehören: kontinuierliche Ermittlung der Getriebeeingangswellendrehzahl, der Motordrehzahl und der Drosselklappenbetätigung, Ermittlung des Betätigungszustandes der Bremsen und der Schalthebelstellung, Bereitstellung eines digitalen Ausgangssignals zur Regelung der Funktion der Hydraulikeinheit HPU, Bereitstellung eines digitalen Ausgangssignals, um einen Motorstart zu ermöglichen, Empfang eines digitalen Eingangssignals, welches über den Betätigungszustand des Startermotors Auskunft gibt, wodurch sichergestellt wird, daß Hydraulikeinheit und Startermotor nicht gleichzeitig betätigt werden.

15. Eine Methode gemäß Anspruch 14, die dadurch charakterisiert ist, daß Daten von einem Bedienerterminal über eine serielle Eingangsleitung empfangen werden.

16. Eine Methode für eine Regelung in einem Sicherheitssystem in einem Kupplungsmanagement-System CMS für eine automatisch betätigte Kupplung, wobei die Kupplung zwischen einem Motor und einem Getriebe eines Fahrzeugs angeordnet ist und durch ein hydraulisches Stellglied (5) betätigt wird; die Kupplung ist mit dem Getriebe über eine Eingangswelle verbunden, und zum Kupplungsmanagement-System CMS gehört eine Hydraulikeinheit HPU, ein Proportionalventil oder Hauptventil (4), das den Ölfluß im Stellglied (5) steuert, welches seinerseits die Stellung des Kupplungsdrucklagers und damit das durch die Kupplung übertragene Drehmoment steuert, und eine elektronische Hauptsteuereinheit ECU (6), welche die Stellung des Stellglieds (5) vermittels des Hauptventils (4) gemäß in der ECU (6) abgespeicherten Algorithmen auf der Grundlage der Signalwerte der Eingangssignale von Sensoren einregelt, die kontinuierlich die Drehzahl der Getriebeeingangswelle, die Stellglied-Stellung, die Motordrehzahl und die Drosselklappenbetätigung ermitteln, ebenso wie die Schalthebelstellung und den Betätigungszustand der Bremsen,
und dadurch charakterisiert, daß eine elektronische Bereitschafts-Steuereinheit ECU (13) bereitgestellt ist, welche die Regelung des Kupplungsmanagement-Systems (CMS) im Fall der Ermittlung eines Störungszustandes in selbigen automatisch übernimmt, wobei in der Bereitschafts-Steuereinheit ECU (13) eine kontinuierlich laufende Zustandsmaschine SM implementiert ist, und zur Regelmethode die folgenden Aufgaben gehören: kontinuierliche Ermittlung der Getriebeeingangswellendrehzahl, der Motordrehzahl und der Drosselklappenbetätigung, Ermittlung des Betätigungszustandes der Bremsen und der Schalthebelstellung, Bereitstellung eines digitalen Ausgangssignals zur Regelung der Funktion der Hydraulikeinheit HPU, Bereitstellung eines digitalen Ausgangssignals, um einen Motorstart zu ermöglichen, Empfang eines digitalen Eingangssignals, welches über den Betätigungszustand des Startermotors Auskunft gibt, wodurch sichergestellt wird, daß Hydraulikeinheit und Startermotor nicht gleichzeitig betätigt werden.

17. Eine Methode gemäß Anspruch 16,
die dadurch charakterisiert ist, daß Daten von einem Bedienerterminal über eine serielle Eingangsleitung empfangen werden.

18. Eine Methode gemäß Anspruch 16,
die dadurch charakterisiert ist, daß der Bereitschafts-Steuereinheit ECU (13) erkenntlich gemacht wird, ob sie die Regelung des Stellglieds (5) versieht oder nicht.

19. Eine Methode gemäß Anspruch 16,
die dadurch charakterisiert ist, daß die Zustandsmaschine SM über die folgenden Zustände verfügt:
1) Initialisierung
2) Motor nicht angesprungen
3) Kupplung ausgekuppelt
4) Anfahren aus dem Stand
5) Kupplung eingekuppelt
6) Zündung aus
wobei jeder Zustand in einen operativen und einen dezisionären Teil untergliedert ist.

20. Eine Methode gemäß Anspruch 19,
die dadurch charakterisiert ist, daß der operative Teil eines Zustandes in der Zustandsmaschine SM verantwortlich ist für die operativen Regelaufgaben, die sich auf einen aktiven Zustand beziehen.

21. Eine Methode gemäß Anspruch 20,
die dadurch charakterisiert ist, daß der operative Teil eines Zustandes in der Zustandsmaschine SM in Form logischer Regelalgorithmen, vorzugsweise kontinuierlich abzuarbeitender Algorithmen, ausgeführt wird.

22. Eine Methode gemäß Anspruch 19,
die dadurch charakterisiert ist, daß der dezisionäre Teil eines Zustandes in der Zustandsmaschine SM in Form von Entscheidungsalgorithmen ausgeführt wird, mit deren Hilfe entschieden wird, ob ein gegebener Zustand beibehalten wird oder ob die Zustandsmaschine in einen anderen Zustand schalten soll.

## Revendications

1. Un système de sécurité dans un système de gestion de l'embrayage (CMS) pour un embrayage actionné automatiquement caractérisé en ce que l'embrayage est situé entre le moteur et la boîte de vitesses dans une automobile et est activé par un actionneur hydraulique (5), l'embrayage étant raccordé à la boîte de vitesses par un arbre d'entrée, caractérisé en ce que le système de gestion de l'embrayage (CMS) comprend une unité de puissance hydraulique (HPU), une vanne de débit proportionnelle ou vanne principale (4) qui contrôle le débit de l'actionneur (5) qui régule la position de la butée de l'embrayage et de ce fait le couple transféré à travers l'embrayage et une unité de commande électronique (ECU) principale (6) qui contrôle la position de l'actionneur (5) par l'intermédiaire de la vanne principale (4) en fonction des algorithmes mémorisés dans l'ECU (6) sur la base de valeurs d'entrée provenant de capteurs qui détectent continuellement la vitesse de l'arbre d'entrée de la boîte de vitesses, la position de l'actionneur, la vitesse du moteur et l'actionnement du papillon des gaz et si les freins sont actionnés ou non ainsi que la position de vitesse,
caractérisé en ce que le système de sécurité comprend une première vanne (10) qui est raccordée à la vanne principale (4) et qui coupe le débit dans l'actionneur, neutralisant ainsi le contrôle par l'unité de commande (ECU) principale (6) de la position de l'actionneur (5) afin d'empêcher un faux mouvement de l'embrayage, une deuxième vanne (11) qui vide l'actionneur (5) à un taux contrôlé, une troisième vanne (12) qui alimente l'actionneur (5) à un taux contrôlé, les vannes (11, 12) étant raccordées à l'unité de puissance hydraulique (HPU) et une unité de commande électronique (ECU) de secours (13) qui en cas de détection d'une condition d'erreur dans le système de gestion de l'embrayage contrôle la position de l'actionneur (5) par l'intermédiaire de la deuxième et de la troisième vanne (11, 12) en fonction des algorithmes mémorisés dans l'ECU (13) et sur la base de valeurs d'entrée provenant de capteurs qui détectent continuellement la vitesse de l'arbre d'entrée de la boîte de vitesse, la vitesse du moteur et l'actionnement du papillon des gaz, si les freins sont actionnés ou non ainsi que la position de vitesse.

2. Un système de sécurité selon la revendication 1,
caractérisé en ce que l'unité de puissance hydraulique (HPU) comprend un réservoir d'huile (1), une pompe à huile (2) et un accumulateur hydraulique (3).

3. Un système de sécurité selon la revendication 1,
caractérisé en ce que l'une ou plus des première, deuxième et troisième vannes (10, 11, 12) est une vanne continue ou à tiroir.

4. Un système de sécurité selon la revendication 1,
caractérisé en ce que l'une ou plus des première, deuxième et trroisième vannes (10, 11, 12) est une vanne marche-arrêt.

5. Un système de sécurité selon la revendication 1,
caractérisé en ce que l'unité de commande principale (ECU) (6) comprend des sorties numériques pour la communication, le contrôle et l'enregistrement.

6. Un système de sécurité selon la revendication 1,
caractérisé en ce qu'il comprend un dispositif de commutation de sécurité (14) qui empêche le système de sécurité de manoeuvrer les deuxième et troisième vannes (11, 12) à moins que la première vanne (10) ne soit effectivement hors service.

7. Un système de sécurité selon la revendication 1,
caractérisé en ce que l'unité de commande (ECU) de secours (13) est intégrée dans le même logement que l'unité de commande (ECU) principale (6).

8. Un système de sécurité selon la revendication 1,
caractérisé en ce que l'unité de commande (ECU) de secours (13) comprend au moins une mémoire dynamique et un microcontrôleur avec un microprocesseur.

9. Un système de sécurité selon la revendication 1,
caractérisé en ce que l'unité de commande de secours comprend des sorties numériques pour la commande, la communication et l'enregistrement.

10. Un système de sécurité selon la revendication 1,
caractérisé en ce que les fonctions de détection de l'unité de commande (ECU) de secours (13) sont assurées avec les mêmes capteurs chargés des fonctions de détection de l'unité de commande (ECU) principale (6).

11. Un système de sécurité selon la revendication 1,
caractérisé en ce que les deuxième et troisième vannes (11, 12) sont contrôlées à partir de l'unité de commande (ECU) de secours (13) par un signal à modulation d'impulsions en durée (PWM).

12. Une unité de commande électronique (ECU) de secours (13) pour un système de sécurité selon les revendications de 1 à 11, caractérisée en ce que l'unité de commande de secours comprend une machine d'état (SM) en service continu.

13. Une unité de commande électronique (ECU) de secours (13) selon la revendication 10 caractérisée en ce que la machine d'état comprend les états suivants:
1) Initialisation
2) Moteur pas démarré
3) Embrayage désengagé
4) Départ de la vitesse zéro
5) Embrayage engagé
6) Contact coupé
chaque état comprend une partie opérationnelle et une partie décision.

14. Une méthode de commande dans un système de sécurité dans un système de gestion de l'embrayage (CMS) pour un embrayage actionné automatiquement caractérisée en ce que l'embrayage est situé entre un moteur et une boîte de vitesses dans une automobile et est activé par un actionneur hydraulique (5), l'embrayage étant raccordé à la boîte de vitesses par un arbre d'entrée, caractérisée en ce que le système de gestion de l'embrayage (CMS) comprend une unité de puissance hydraulique (HPU), une vanne de débit proportionnelles ou vanne principale (4) qui contrôle le débit de l'actionneur (5), qui régule la position de la butée de l'embrayage et de ce fait le couple transféré à travers l'embrayage, et une unité de commande électronique (ECU) principale (6) qui contrôle la position de l'actionneur (5) par l'intermédiaire de la vanne principale (4) en fonction d'algorithmes mémorisés dans l'ECU (6) sur la base de valeurs d'entrée provenant de capteurs qui détectent continuellement la vitesse de l'arbre d'entrée de l'embrayage, la position de l'actionneur, la vitesse du moteur et l'actionnement du papillon des gaz, si les freins sont actionnés ou non ainsi que la position de vitesse,
caractérisée en ce qu'elle prévoit une unité de commande (ECU) de secours (13) qui se charge automatiquement du système de gestion de l'embrayage (CMS) lorsqu'un état d'erreur y est détecté, la méthode de commande comprenant les étapes suivants: détection continue de la vitesse de l'arbre d'entrée de l'embrayage, vitesse du moteur et actionnement du papillon des gaz, détection des freins actionnés ou non, détection de la position de vitesse, émission d'un signal de sortie numérique afin de contrôler le fonctionnement de l'unité de puissance hydraulique (HPU), émission d'un signal de sortie numérique afin de permettre le démarrage du moteur et réception d'un signal d'entrée numérique qui indique si un moteur de lancement est actif ou non, assurant ainsi que l'unité de puissance hydraulique et le moteur de lancement ne sont pas actionnés simultanément.

15. Une méthode selon la revendication 14, caractérisée en ce qu'elle reçoit des données d'un terminal opérateur par l'intermédiaire d'une ligne d'entrée sérielle.

16. Une méthode de commande dans un système de sécurité dans un système de gestion de l'embrayage (CMS) pour un embrayage actionné automatiquement caractérisée en ce que l'embrayage est situé entre un moteur et une boîte de vitesses dans une automobile et est activé par un actionneur hydraulique (5), l'embrayage étant raccordé à la boîte de vitesses par l'intermédiaire d'un arbre d'entrée, caractérisée en ce que le système de gestion de l'embrayage (CMS) comprend une unité de puissance hydraulique (HPU), une vanne de débit proportionnelle ou vanne principale (4) qui contrôle de débit dans l'actionneur (5), qui régule la position de la butée de l'embrayage et de ce fait le couple transféré à travers l'embrayage, et une unité de commande électronique (ECU) principale (6) qui contrôle la position de l'actionneur (5) par l'intermédiaire de la vanne principale (4) en fonction d'algorithmes mémorisés dans l'ECU (6) sur la base de valeurs d'entrée provenant de capteurs qui détectent continuellement la vitesse de l'arbre d'entrée de l'embrayage, la position de l'actionneur, la vitesse du moteur et l'actionnement du papillon des gaz, si les freins sont actionnés ou non, ainsi que la position de vitesse,
caractérisée en ce qu'elle prévoit une unité de commande électronique (ECU) de secours (13) qui se charge automatiquement du système de gestion de l'embrayage (CMS) lorsqu'un état d'erreur y est détecté, et mettant en oeuvre une machine d'état (SM) en service continu dans l'unité de commande (ECU) de secours (13), la méthode de commande comprenant les étapes suivants: détection continue de la vitesse de l'arbre d'entrée de l'embrayage, vitesse du moteur et actionnement du papillon des gaz, détection des freins actionnés ou non, détection de la position de vitesse, émission d'un signal de sortie numérique afin de contrôler le fonctionnement de l'unité de puissance hydraulique (HPU), émission d'un signal de sortie numérique afin de permettre le démarrage du moteur et réception d'un signal d'entrée numérique qui indique si un moteur de lancement est actif ou non, assurant ainsi que l'unité de puissance hydraulique et le moteur de lancement ne sont pas actionnés simultanément.

17. Une méthode selon la revendication 16,
caractérisée en ce que des données sont reçues d'un terminal opérateur par l'intermédiaire d'une ligne d'entrée sérielle.

18. Une méthode selon la revendication 16,
caractérisée en ce qu'elle indique à l'unité de commande (ECU) de secours (13) si elle a le contrôle de l'actionneur (5) ou non.

19. La méthode selon la revendication 16,
caractérisée en ce qu'elle fournit à la machine d'état (SM) les états suivants:
1) Initialisation
2) Moteur pas démarré
3) Embrayage désengagé
4) Départ de la vitesse zéro
5) Embrayage engagé
6) Contact coupé
chaque état comprenant une partie opérationnelle et une partie décision.

20. Une méthode selon la revendication 19,
caractérisée en ce qu'elle applique la partie opérationnelle d'un état dans la machine d'état (SM) aux tâches de commande opérationnelle se rapportant à un état actif.

21. Une méthode selon la revendication 20,
caractérisée en ce que la partie opérationnelle d'un état dans la machine d'état (SM) est conçue sous la forme d'algorithmes de commande logiques, de préférence en tant qu'algorithmes continus.

22. Une méthode selon la revendication 19,
caractérisée en ce que la partie décision d'un état dans la machine d'état (SM) est conçue sous la forme d'algorithmes de décision qui décident si un état existant doit continuer ou si la machine d'état doit passer à un autre état.
